(19) Europäisches Patentamt
European Patent Office
Office européen des brevets

(11) **EP 4 783 525 A1**

(12) **EUROPEAN PATENT APPLICATION**
published in accordance with Art. 153(4) EPC

(43) Date of publication:
**29.07.2026 Bulletin 2026/31**

(21) Application number: **24870505.5**

(22) Date of filing: **14.09.2024**

(51) International Patent Classification (IPC):
**H04L 25/02** $^{(2006.01)}$

(52) Cooperative Patent Classification (CPC):
**H04L 25/02**

(86) International application number:
**PCT/CN2024/119189**

(87) International publication number:
**WO 2025/066961 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.09.2023 CN 202311294996**

(71) Applicant: **HUAWEI TECHNOLOGIES CO., LTD.
Shenzhen 518129 (CN)**

(72) Inventors:
• **GAO, Junhui
Shenzhen, Guangdong 518129 (CN)**
• **WANG, Hanqing
Shenzhen, Guangdong 518129 (CN)**
• **WANG, Xiaohan
Shenzhen, Guangdong 518129 (CN)**

(74) Representative: **Gill Jennings & Every LLP
The Broadgate Tower
20 Primrose Street
London EC2A 2ES (GB)**

(54) **PHASE COMPENSATION METHOD AND COMMUNICATION APPARATUS**

(57) This application provides a phase compensation method and a communication apparatus, to improve phase compensation accuracy, and may be applied to a communication system. The method includes: A terminal receives at least two reference signal sets, where each of the at least two reference signal sets includes at least one reference signal; and the terminal sends first information based on the at least two reference signal sets, where the first information indicates a corresponding phase variation between reference signal sets in the at least two reference signal sets at a first moment.

```
Network          ...        Network              Terminal
device 1                    device 2             device

                     S701: Reference signal set
                                        ────────────────────▶

            S701: Reference signal set
                            ──────────────────────────────▶

            S702: Send first information based
            on at least two reference signal sets
      ◀────────────────────────

  ┌──────────────────────────────────────────┐
  │ S703: A network device in at least two network │
  │ devices performs phase compensation based on   │
  │ the first information                           │
  └──────────────────────────────────────────┘
```

FIG. 7

**Description**

This application claims priority to Chinese Patent Application No. 202311294996.7, filed with the China National Intellectual Property Administration on September 28, 2023 and entitled "PHASE COMPENSATION METHOD AND COMMUNICATION APPARATUS", which is incorporated herein by reference in its entirety.

**TECHNICAL FIELD**

This application relates to the field of communication technologies, and in particular, to a phase compensation method and a communication apparatus.

**BACKGROUND**

In a coherent joint transmission (coherent joint transmission, CJT) scenario, a plurality of network devices may provide services for a same terminal in a coordinated manner. Signals sent by the plurality of network devices are coherently superposed at the terminal, and interference is coherently canceled at the terminal, so that a signal-to-noise ratio can be improved. In an actual communication system, if clock sources of all the plurality of network devices are different, a phase offset (also referred to as a phase shift) occurs between the signals sent by the plurality of network devices. As a result, the signals sent by the plurality of network devices cannot be completely coherently superposed at the terminal, and interference cannot be completely coherently canceled, affecting a transmission effect.

Therefore, when the plurality of network devices that do not share a clock source provide services for the terminal in a coordinated manner, how to improve a CJT transmission effect is an urgent problem to be resolved.

**SUMMARY**

Embodiments of this application provide a phase compensation method and a communication apparatus, to improve phase compensation accuracy.

To achieve the foregoing objective, this application uses the following technical solutions.

According to a first aspect, a phase compensation method is provided. The phase compensation method includes: A terminal receives at least two reference signal sets, where each of the at least two reference signal sets includes at least one reference signal; and the terminal sends first information based on the at least two reference signal sets, where the first information indicates a corresponding phase variation between reference signal sets in the at least two reference signal sets at a first moment.

Based on the phase compensation method provided in the first aspect, the terminal may perform phase measurement based on the at least two reference signal sets, and send the corresponding phase variation between the reference signal sets in the at least two reference signal sets at the first moment, that is, a phase variation between a plurality of network devices that provide services for the terminal in a coordination scenario. At different moments, phase variations between the plurality of network devices that provide the services for the terminal may be different. The network device may perform phase compensation on a downlink signal based on the corresponding phase variation that is between the reference signal sets in the at least two reference signal sets at the first moment and that is reported by the terminal, to improve phase compensation accuracy, and improve a CJT transmission effect.

In a possible design solution, the corresponding phase variation between the reference signal sets in the at least two reference signal sets includes a corresponding phase variation between a first reference signal set and a second reference signal set. The second reference signal set is a preset reference signal set in the at least two reference signal sets, and the first reference signal set is any reference signal set in the at least two reference signal sets other than the second reference signal set. In other words, a corresponding phase variation between two reference signal sets may be calculated by using one preset reference signal set in the at least two reference signal sets as a reference. In this way, when a quantity of reference signal sets is greater than or equal to 3, complexity of the first information may be simplified, to reduce resource overheads.

In a possible design solution, the corresponding phase variation between the reference signal sets in the at least two reference signal sets includes a corresponding phase variation between an $i^{th}$ reference signal set and an $(i + 1)^{th}$ reference signal set that are in the at least two reference signal sets. $i$ is an integer, and $1 \leq i < I$. $I$ is a total quantity of reference signal sets in the at least two reference signal sets.

In a possible design solution, the corresponding phase variation between the reference signal sets in the at least two reference signal sets is related to an index of a frequency domain unit. In this way, the corresponding phase variation between the reference signal sets in the at least two reference signal sets may be separately obtained for different frequency domain units, to further improve phase compensation accuracy.

Optionally, the phase variation at the first moment and the index of the frequency domain unit satisfy a linear relationship. Therefore, reporting complexity of the phase variation at the first moment can be simplified, and feedback overheads can be reduced.

Further, the phase variation at the first moment and the index of the frequency domain unit satisfy the following relationship: $P1 = 2\pi\rho + 2\pi k\sigma$. P1 is the phase variation at the first moment. $k$ is the index of the frequency domain unit. $k$ is a positive integer greater than or equal to 0. $\rho$ is a constant. $\sigma$ is a constant.

In a possible design solution, the reference signal is a channel state information-reference signal CSI-RS.

Optionally, the first moment is an end position of a last reference signal set that is in the at least two reference signal sets and that is before a channel state information CSI reference resource. Alternatively, the first moment is a time domain position corresponding to a CSI reference resource. Alternatively, the first moment is a start moment at which the first information is reported. Alternatively, the first moment is a moment after a start moment at which the first information is reported, and a time length between the first moment and a moment at which the first information is reported is a first time length.

In a possible design solution, a reference signal in each of the at least two reference signal sets is carried on a reference signal resource in a same reference signal resource set. The reference signal resource set includes a plurality of reference signal resources.

Optionally, in the plurality of reference signal resources in the reference signal resource set, a same port index corresponds to a same port; and/or the plurality of reference signal resources in the reference signal resource set are quasi colocated. In this way, accuracy of a phase shift measured by the terminal can be improved, to further improve phase compensation accuracy.

In a possible design solution, reference signals in different reference signal sets in the at least two reference signal sets are respectively carried on reference signal resources in different reference signal resource sets. The reference signal resource set includes one reference signal resource.

In a possible design solution, a reference signal in each of the at least two reference signal sets is carried on reference signal resources in a plurality of reference signal resource sets.

Optionally, each of the plurality of reference signal resource sets includes at least one reference signal resource having a same resource identifier.

Alternatively, optionally, reference signal resources in the plurality of reference signal resource sets are arranged in an order of resource identifiers, and same port indexes of reference signal resources that are in different reference signal resource sets and that have a same arrangement ranking correspond to a same port; and/or reference signal resources that are in different reference signal resource sets and that have a same arrangement ranking are quasi colocated. In this way, accuracy of a phase shift measured by the terminal can be improved, to further improve phase compensation accuracy.

In a possible design solution, reference signals in all of the at least two reference signal sets are carried on reference signal resources in a same reference signal resource set. The reference signal resource set includes a plurality of reference signal resources, and reference signals in different reference signal sets are carried on different reference signal resources.

According to a second aspect, a phase compensation method is provided. The phase compensation method includes: A network device sends a reference signal set to a terminal, where the reference signal set includes at least one reference signal; and the network device receives first information that is sent by the terminal based on at least two reference signal sets, where the first information indicates a corresponding phase variation between reference signal sets in the at least two reference signal sets at a first moment.

Based on the phase compensation method provided in the second aspect, the network device may send the reference signal set, and receive the first information that is fed back by the terminal based on reference signal sets of a plurality of network devices, that is, indicating a corresponding phase variation between reference signal sets of the plurality of network devices at the first moment, that is, a phase variation between the plurality of network devices. In this way, the network device may perform phase compensation on a downlink signal based on the corresponding phase variation between the reference signal sets in the at least two reference signal sets at the first moment. Therefore, phase compensation accuracy is improved.

In a possible design solution, the phase variation between the reference signal sets in the at least two reference signal sets includes a corresponding phase variation between a first reference signal set and a second reference signal set. The second reference signal set is a preset reference signal set in the at least two reference signal sets, and the first reference signal set is any reference signal set in the at least two reference signal sets other than the second reference signal set.

In a possible design solution, the corresponding phase variation between the reference signal sets in the at least two reference signal sets includes a corresponding phase variation between an $i^{th}$ reference signal set and an $(i + 1)^{th}$ reference signal set that are in the at least two reference signal sets. $i$ is an integer, and $1 \leq i < I$. $I$ is a total quantity of reference resource sets in the at least two reference signal sets.

In a possible design solution, the corresponding phase variation between the reference signal sets in the at least two reference signal sets is related to an index of a frequency domain unit.

Optionally, the phase variation at the first moment and the index of the frequency domain unit satisfy a linear relationship.

Further, the phase variation at the first moment and the index of the frequency domain unit satisfy the following relationship: $P1 = 2\pi\rho + 2\pi k\sigma$. P1 is the phase variation at the first moment. $k$ is the index of the frequency domain unit. $k$ is a positive integer greater than or equal to 0. $\rho$ is a constant. $\sigma$ is a constant.

In a possible design solution, the reference signal is a channel state information-reference signal CSI-RS.

In a possible design solution, the first moment is an end position of a last reference signal set that is in the at least two reference signal sets and that is before a channel state information CSI reference resource. Alternatively, the first moment is a time domain position corresponding to a CSI reference resource. Alternatively, the first moment is a start moment at which the first information is reported. Alternatively, the first moment is a moment after a start moment at which the first information is reported, and a time length between the first moment and a moment at which the first information is reported is a first time length.

In a possible design solution, a reference signal in each of the at least two reference signal sets is carried on a reference signal resource in a same reference signal resource set. The reference signal resource set includes a plurality of reference signal resources.

Optionally, in the plurality of reference signal resources in the reference signal resource set, a same port index corresponds to a same port; or the plurality of reference signal resources in the reference signal resource set are quasi colocated.

In a possible design solution, reference signals in different reference signal sets in the at least two reference signal sets are respectively carried on reference signal resources in different reference signal resource sets. The reference signal resource set includes one reference signal resource.

In a possible design solution, a reference signal in each of the at least two reference signal sets is carried on reference signal resources in a plurality of reference signal resource sets.

Optionally, each reference signal resource in the plurality of reference signal resource sets includes at least one reference signal resource having a same resource identifier.

Alternatively, optionally, reference signal resources in the plurality of reference signal resource sets are arranged in an order of resource identifiers, and same port indexes of reference signal resources that are in different reference signal resource sets and that have a same arrangement ranking correspond to a same port; and/or reference signal resources that are in different reference signal resource sets and that have a same arrangement ranking are quasi colocated.

In a possible design solution, reference signals in all of the at least two reference signal sets are carried on reference signal resources in a same reference signal resource set. The reference signal resource set includes a plurality of reference signal resources, and reference signals in different reference signal sets are carried on different reference signal resources.

In a possible design solution, the method provided in the second aspect further includes: The network device performs phase compensation based on the first information.

In addition, for technical effects of the phase compensation method in the second aspect, refer to the technical effects of the phase compensation method in the first aspect. Details are not described herein again.

According to a third aspect, a communication apparatus is provided. The communication apparatus is configured to perform the phase compensation method according to any one of the implementations of the first aspect and the second aspect.

In this application, the communication apparatus according to the third aspect may be the terminal according to the first aspect, the network device according to the second aspect, a chip (system) or another part or component that may be disposed in the terminal or the network device, or an apparatus including the terminal or the network device.

It should be understood that the communication apparatus in the third aspect includes a corresponding module, unit, or means (means) for implementing the phase compensation method according to either of the first aspect and the second aspect. The module, the unit, or the means may be implemented by hardware, may be implemented by software, or may be implemented by hardware executing corresponding software. The hardware or software includes one or more modules or units configured to perform functions related to the foregoing phase compensation method.

According to a fourth aspect, a communication apparatus is provided. The communication apparatus includes a processor. The processor is configured to perform the phase compensation method according to any one of the possible implementations of the first aspect and the second aspect.

In a possible design solution, the communication apparatus according to the fourth aspect may further include a transceiver. The transceiver may be a transceiver circuit or an interface circuit. The transceiver may be used by the communication apparatus according to the fourth aspect to communicate with another communication apparatus.

In a possible design solution, the communication apparatus according to the fourth aspect may further include a memory. The memory and the processor may be integrated together, or may be disposed separately. The memory may be configured to store a computer program and/or data in the phase compensation method according to either of the first aspect and the second aspect.

In this application, the communication apparatus according to the fourth aspect may be the terminal according to the first aspect, the network device according to the second aspect, a chip (system) or another part or component that may be disposed in the terminal or the network device, or an apparatus including the terminal or the network device.

According to a fifth aspect, a communication apparatus is provided. The communication apparatus includes a processor. The processor is coupled to a memory, and the processor is configured to execute a computer program stored in the memory, so that the communication apparatus performs the phase compensation method according to any one of the possible implementations of the first aspect and the second aspect.

In a possible design solution, the communication apparatus according to the fifth aspect may further include a transceiver. The transceiver may be a transceiver circuit or an interface circuit. The transceiver may be used by the communication apparatus according to the fifth aspect to communicate with another communication apparatus.

In this application, the communication apparatus according to the fifth aspect may be the terminal according to the first aspect, the network device according to the second aspect, a chip (system) or another part or component that may be disposed in the terminal or the network device, or an apparatus including the terminal or the network device.

According to a sixth aspect, a communication apparatus is provided, and includes a processor and a memory. The memory is configured to store a computer program. When the processor executes the computer program, the communication apparatus is caused to perform the phase compensation method according to any one of the implementations of the first aspect and the second aspect.

In a possible design solution, the communication apparatus according to the sixth aspect may further include a transceiver. The transceiver may be a transceiver circuit or an interface circuit. The transceiver may be used by the communication apparatus according to the sixth aspect to communicate with another communication apparatus.

In this application, the communication apparatus according to the sixth aspect may be the terminal according to the first aspect, the network device according to the second aspect, a chip (system) or another part or component that may be disposed in the terminal or the network device, or an apparatus including the terminal or the network device.

According to a seventh aspect, a communication apparatus is provided, and includes a processor. The processor is configured to: be coupled to a memory; and after reading a computer program in the memory, perform, based on the computer program, the phase compensation method according to any one of the implementations of the first aspect and the second aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In this application, the communication apparatus according to the seventh aspect may be the terminal according to the first aspect, the network device according to the second aspect, a chip (system) or another part or component that may be disposed in the terminal or the network device, or an apparatus including the terminal or the network device.

According to an eighth aspect, a processor is provided. The processor is configured to perform the phase compensation method according to any one of the possible implementations of the first aspect and the second aspect.

According to a ninth aspect, a communication system is provided. The communication system includes one or more terminals and one or more network devices.

According to a tenth aspect, a computer-readable storage medium is provided, and includes a computer program or instructions. When the computer program or the instructions are run on a computer, the computer is caused to perform the phase compensation method according to any one of the possible implementations of the first aspect and the second aspect.

According to an eleventh aspect, a computer program product is provided, and includes a computer program or instructions. When the computer program or the instructions are run on a computer, the computer is caused to perform the phase compensation method according to any one of the possible implementations of the first aspect and the second aspect.

In addition, for technical effects of the communication apparatus according to the third aspect to the eleventh aspect, refer to technical effects of the phase compensation method according to the first aspect and the second aspect. Details are not described herein again.

## BRIEF DESCRIPTION OF DRAWINGS

FIG. 1 is a diagram of an architecture of a communication system in IPRAN networking according to an embodiment of this application;
FIG. 2 is a diagram of a sampling frequency offset and a carrier frequency offset caused by different clocks;
FIG. 3 is a diagram of phase feedback according to an embodiment of this application;

FIG. 4A and FIG. 4B are a diagram of channels of different network devices according to an embodiment of this application;

FIG. 5 is a diagram of an architecture of a communication system according to an embodiment of this application;

FIG. 6 is a diagram of information exchange between a network device and a terminal according to an embodiment of this application;

FIG. 7 is a schematic flowchart of a phase compensation method according to an embodiment of this application;

FIG. 8 is a diagram 1 of a relationship between an RS resource set, an RS resource, and an RS set according to an embodiment of this application;

FIG. 9 is a diagram 1 of a relationship between a periodicity, an RS resource set, an RS resource, and an RS set according to an embodiment of this application;

FIG. 10 is a diagram 2 of a relationship between an RS resource set, an RS resource, and an RS set according to an embodiment of this application;

FIG. 11 is a diagram 3 of a relationship between an RS resource set, an RS resource, and an RS set according to an embodiment of this application;

FIG. 12 is a diagram 2 of a relationship between a periodicity, an RS resource set, an RS resource, and an RS set according to an embodiment of this application;

FIG. 13 is a diagram of a first moment according to an embodiment of this application;

FIG. 14A to FIG. 14C are a diagram of a correspondence between a phase shift difference indicated by first information and a reference signal set according to an embodiment of this application;

FIG. 15 is a diagram of a phase that is compensated for according to an embodiment of this application;

FIG. 16 is a diagram 1 of a structure of a communication apparatus according to an embodiment of this application; and

FIG. 17 is a diagram 2 of a structure of a communication apparatus according to an embodiment of this application.

## DESCRIPTION OF EMBODIMENTS

The following describes technical terms and technical solutions in this application with reference to the accompanying drawings.

1. A symbol (symbol) may also be referred to as a time domain symbol. In embodiments of this application, the symbol may be an orthogonal frequency division multiplexing (orthogonal frequency division multiplexing, OFDM) symbol, or may be a discrete Fourier transform-spread-OFDM (discrete Fourier transform-spread-OFDM, DFT-s-OFDM) symbol. Unless otherwise specified, all symbols in embodiments of this application are time domain symbols.

It should be understood that, in the following embodiments, a symbol is used as an example. In an actual implementation, the symbol may alternatively be another time domain unit, including a plurality of symbols, at least one slot (slot), at least one mini-slot (mini-slot), or the like.

2. One frequency domain unit may include at least one sub-carrier (sub-carrier). It may be understood that the frequency domain unit may be further divided based on another possible frequency domain granularity, for example, a resource block (resource block, RB), a physical resource block (physical resource block, PRB), a resource block group (resource block group, RBG), or a virtual resource block (virtual resource block, VRB). In other words, one frequency domain unit may include at least one RB, PRB, RBG, or VRB. Details are not described herein.

A coherent joint transmission (coherent joint transmission, CJT) technology can improve a downlink signal to interference and noise ratio (signal to interference and noise ratio, SINR), that is, a signal-to-noise ratio. In a communication solution based on the CJT technology, a plurality of network devices may provide services for a same terminal in a coordinated manner. Signals sent by the plurality of network devices that provide services for the terminal in a coordinated manner are coherently superposed at the terminal, and interference signals are coherently canceled at the terminal. In this way, a network throughput can be improved, and user experience can be improved. Signal processing, sampling, and carrier generation are all performed based on clock signals. Assuming that clocks of the plurality of network devices are different, the plurality of network devices do not share a clock source. As a result, clock signals generated by clock sources of these network devices are asynchronous (which may also be referred to as clock asynchrony or clock asynchronization). For example, frequencies and/or phases of clock signals of different network devices are different. Consequently, phases of signals received by the terminal from different network devices cannot satisfy a coherence condition, and a CJT transmission effect is affected. In other words, when coherent processing is performed on the signals, clock signal synchronization (which may also be referred to as clock synchronization) between different network devices that need to provide services in a coordinated manner is needed, that is, clock signals of different network devices have a consistent phase.

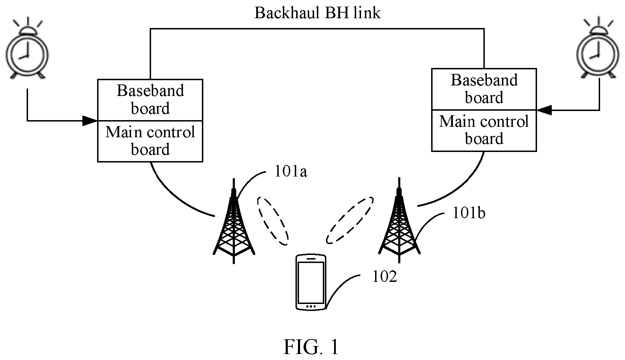

Internet protocol radio access network (internet protocol radio access network, IPRAN) networking is used as an example, as shown in FIG. 1, a communication system using the IPRAN networking includes a network device 101a, a network device 101b, and a terminal 102. Both the network device 101a and a network device 102b include a universal main control (universal main processing and transmission, UMPT) unit and a universal baseband processing (universal baseband processing, UBBP) unit. The universal main processing and transmission unit is configured to provide signaling processing and resource management functions, and a communication baseband processing unit may be configured to implement a baseband signal processing function. The network device 101a and the network device 101b may communicate with each other through a backhaul (backhaul, BH) link. Clock sources of the network device 101a and the network device 101b are different. When the network device 101a and the network device 101b provide services for the terminal in a coordinated manner, a phase shift of a signal from a network device 1 after arriving at the terminal is inconsistent with a phase shift of a signal from a network device 2 after arriving at the terminal. In other words, the signal of the network device 1 and the signal of the network device 2 that are received by the terminal do not satisfy a complete coherence condition, affecting a CJT transmission effect.

It may be understood that the phase shift is an offset amount of a phase of a signal, that is, a phase offset.

That clock signals of different network devices have different frequencies may also mean that a deviation exists between clock signals of different network devices. That clock signals of different network devices have different phases may also mean that a phase deviation exists between the clock signals of the different network devices.

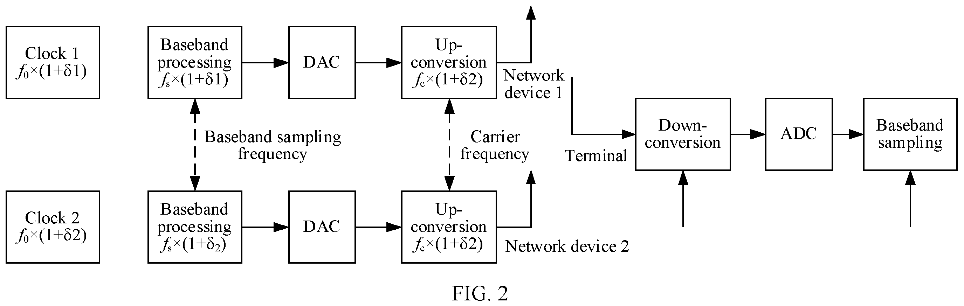

For ease of understanding, the following describes, with reference to two network devices, for example, the network device 1 and the network device 2, impact of different clock sources of the plurality of network devices that provide services in a coordinated manner on a received signal of the terminal. As shown in FIG. 2, it is assumed that the network device 1 and the network device 2 provide services for the terminal in a coordinated manner, the network device 1 and the network device 2 do not share a clock source, reference clock frequencies of the network device 1 and the network device 2 are both $f_0$, a deviation of a clock frequency of the network device 1 relative to the reference clock frequency is $\delta 1$, and a deviation of a clock frequency of the network device 2 relative to the reference clock frequency is $\delta 2$. In this case, a frequency of a clock signal generated by a clock source of the network device 1 is $f_0 * (1 + \delta 1)$, and a frequency of a clock signal generated by a clock source of the network device 2 is $f_0 * (1 + \delta 2)$.

Baseband sampling clocks of the network device 1 and the network device 2 and carrier signals used for up-conversion are generated by using clock signals of the network device 1 and the network device 2 as a reference. Therefore, when a deviation exists between the frequency of the clock signal and the reference clock frequency, a deviation is introduced into a corresponding baseband sampling clock frequency and a corresponding carrier frequency. In other words, the deviation between the frequency of the clock signal and the reference clock frequency causes the deviation between the baseband sampling clock frequency and the carrier frequency. For example, for the network device 1, a baseband sampling clock frequency is generated based on the frequency of the clock signal generated by the clock source of the network device 1, and a baseband sampling clock frequency $f_S^{TRP1}$ of the network device 1 satisfies a relationship shown in the following formula (1):

$$f_S^{TRP1} = f_S * (1 + \delta 1) \qquad (1)$$

After digital-to-analog conversion is performed on the baseband sampling clock frequency of the network device 1 by using a digital/analog converter (digital-to-analog converter, DAC), up-conversion is performed based on a carrier corresponding to the network device 1. A carrier frequency of the carrier of the network device 1 satisfies a relationship shown in the following formula (2):

$$f_C^{TRP1} = f_C * (1 + \delta 1) \qquad (2)$$

For the network device 2, a baseband sampling clock frequency is generated based on the frequency of the clock signal generated by the clock source of the network device 2, and a baseband sampling clock frequency $f_S^{TRP2}$ of the network device 2 satisfies a relationship shown in the following formula (3):

$$f_S^{TRP2} = f_S * (1 + \delta 2) \qquad (3)$$

After digital-to-analog conversion is performed on the baseband sampling clock frequency of the network device 2 by using a digital/analog converter (digital-to-analog converter, DAC), up-conversion is performed based on a carrier corresponding to the network device 2. A carrier frequency of the carrier of the network device 2 satisfies a relationship shown in the following formula (4):

$$f_C^{TRP2} = f_C * (1 + \delta 2) \tag{4}$$

$f_S$ is a baseband sampling reference frequency, $f_C^{TRP1}$ is a carrier frequency of the network device 1, $f_C$ is a carrier reference frequency, and $f_C^{TRP2}$ is a carrier frequency of the network device 2.

A baseband sampling periodicity of the network device 1 is $T_S^{TRP1} = \frac{1}{f_S^{TRP1}}$ , and a baseband sampling periodicity of the network device 2 is $T_S^{TRP2} = \frac{1}{f_S^{TRP2}}$ .

It is assumed that a carrier frequency used by the terminal for down-conversion is $f_C^{UE}$ , and a baseband sampling periodicity used by the terminal for down-conversion is $T_S^{UE}$ . After receiving the signal from the network device 1 and the signal from the network device 2, the terminal performs down-conversion on the received signals based on a carrier used for down-conversion, and performs analog-to-digital conversion on the down-converted signals by using an analog-to-digital converter (analog-to-digital converter, ADC), to obtain a baseband signal.

In this case, a carrier frequency offset (carrier frequency offset, CFO), that is, $\varepsilon_1$, of the network device 1 relative to the terminal satisfies a relationship shown in the following formula (5):

$$\varepsilon_1 \propto f_C^{TRP1} - f_C^{UE} \tag{5}$$

$\propto$ means being proportional to.

A carrier frequency offset, that is, $\varepsilon_2$, of the network device 2 relative to the terminal satisfies a relationship shown in the following formula (6):

$$\varepsilon_2 \propto f_C^{TRP2} - f_C^{UE} \tag{6}$$

A sampling frequency offset (sampling frequency offset, SFO), that is, $\mu_1$, of the network device 1 relative to the terminal satisfies a relationship shown in the following formula (7):

$$\mu_1 \propto T_S^{TRP1} - T_S^{UE} \tag{7}$$

A sampling frequency offset, that is, $\mu_2$, of the network device 2 relative to the terminal satisfies a relationship shown in the following formula (8):

$$\mu_2 \propto T_S^{TRP2} - T_S^{UE} \tag{8}$$

The following analyzes, based on the foregoing parameters, impact of the SFO and the CFO on a signal received by the terminal, that is, the signal received by the terminal from the network device 1 or the signal received by the terminal from the network device 2.

Case 1: The SFO affects a received signal of the terminal.

A received signal that is from one network device and that is received by the terminal satisfies a relationship shown in the following formula (9):

$$r(t) = \sum_{l=0}^{+\infty} \sum_{k=0}^{K-1} H_{l,k} s_{l,k} e^{j2\pi k \Delta f \left( t - l T_{Symb} \right)} \tag{9}$$

t represents a moment at which the terminal receives a signal. r(t) represents a signal received from the network device at the moment t. l is an identifier of a symbol (for example, an OFDM symbol), that is, an $l^{th}$ symbol, or a symbol l. k is an identifier of a frequency domain unit (for example, a sub-carrier), that is, a $k^{th}$ frequency domain unit, or a frequency domain unit k, k is greater than or equal to 0, and k is an integer. $H_{l,k}$ represents a channel on the symbol l and the frequency domain unit k. $s_{l,k}$ represents a signal on the symbol l and the frequency domain unit k. $\Delta f$ represents a frequency spacing between two adjacent frequency domain units. $T_{symb}$ represents a periodicity of one symbol, that is, a time length. If a baseband sampling periodicity of the network device is $T_S$, and a deviation between a baseband sampling periodicity of the terminal and the baseband sampling periodicity of the network device is $\Delta T_S$, that is, the baseband sampling periodicity of the terminal is $T_S + \Delta T_S$, a received signal of the terminal at an $n^{\text{th}}$ sampling point on the symbol $l$ satisfies the relationship shown in the following formula (10):

$$R_{l,n} = r\big((lK + n)(T_S + \Delta T_S)\big) \tag{10}$$

A signal on the symbol $l$ is sampled, to obtain received signals $\{R_{l,n}\}_{n=0}^{K-1}$ (a discrete point sequence in time domain) at a $0^{\text{th}}$ sampling point to a $(K-1)^{\text{th}}$ sampling point on the symbol $l$. Discrete Fourier transform (discrete Fourier transform, DFT) is performed on $\{R_{l,n}\}_{n=0}^{K-1}$, to obtain a frequency domain receive sequence $\{A_{l,k}\}_{k=0}^{K-1}$, that is, signals received by the terminal on the symbol $l$ and each of a frequency domain unit 0 to a frequency domain unit K-1. $A_{l,k}$ represents a signal received by the terminal on the symbol $l$ and the frequency domain unit $k$. $A_{l,k}$ satisfies a relationship shown in the following formula (11):

$$A_{l,k} = H_{l,k} s_{l,k} e^{j2\pi kl \frac{T_S + \Delta T_S}{T_S}} \tag{11}$$

With reference to the formula (11), it can be learned that a phase shift generated by the received signal on the terminal due to the SFO is $\varphi_{SFO} = 2\pi kl \frac{\Delta T_S}{T_S}$, and the phase shift caused by the SFO is related to the frequency domain unit $k$ and the symbol $l$. In other words, the phase shift caused by the SFO is related to a frequency domain unit $k$ and time.

Case 2: The CFO affects a received signal of the terminal.

It is assumed that the deviation between the carrier frequency of the terminal and the carrier frequency of the network device is $\Delta f_C$, and the carrier frequency used by the terminal to perform down-conversion is $f_C^{\text{UE}}$. In this case, the carrier frequency used by the network device to perform up-conversion is $f_C^{\text{UE}} + \Delta f_C$. If a time domain signal sent by the network device is $x(t)$, due to existence of the CFO, a received signal received by the terminal after down-conversion is performed on the time domain signal sent by the network device is $x(t)e^{j2\pi(fC+\Delta fC)}t$. Correspondingly, a baseband signal on the terminal is $x(t)e^{j2\pi\Delta fCt}$. It can be learned that, compared with the time domain signal $x(t)$ sent by the network device, a generated phase shift on the received signal on the terminal due to the CFO is $2\pi\Delta f_C t$, and the phase shift changes with time.

It can be learned from analysis of the foregoing Case 1 and Case 2 that both the SFO and the CFO cause a phase shift of a signal sent by the network device at the terminal.

For ease of understanding, an SFO between the network device and the terminal is referred to as an SFO corresponding to the network device below, and a CFO between the network device and the terminal is referred to as a CFO corresponding to the network device below. For example, an SFO between the network device 1 and the terminal is referred to as an SFO corresponding to the network device 1 below, and a CFO between the network device 1 and the terminal is referred to as a CFO corresponding to the network device 1 below. An SFO between the network device 2 and the terminal is referred to as an SFO corresponding to the network device 2 below, and a CFO between the network device 2 and the terminal is referred to as a CFO corresponding to the network device 2 below.

With reference to Case 1 and Case 2, the following describes impact of the SFO and the CFO on a received signal of the terminal when the plurality of network devices provide services for the terminal in a coordinated manner.

Still with reference to an example in which the network devices that provide services for the terminal in a coordinated manner include the network device 1 and the network device 2, the SFO corresponding to the network device 1 is $\mu_1$, and the CFO corresponding to the network device 1 is $\varepsilon_1$. In this case, a channel $H_{l,k}^1$ between the network device 1 and the terminal satisfies a relationship shown in the following formula (12):

$$H_{l,k}^1 = H_{0,k}^1 e^{j2\pi(\varepsilon_1 + k\mu_1)l} \tag{12}$$

$H_{l,k}^1$ is a channel of the network device 1 on a symbol $l$ and a frequency domain unit $k$, and $H_{0,k}^1$ is a channel of the network device 1 on a symbol 0 and the frequency domain unit $k$.

Similarly, if the SFO corresponding to the network device is $\mu_2$, and the CFO corresponding to the network device 2 is $\varepsilon_2$, a channel $H_{l,k}^2$ between the network device 2 and the terminal satisfies a relationship shown in the following formula (13):

$$H_{l,k}^2 = H_{0,k}^2 e^{j2\pi(\varepsilon_2 + k\mu_2)l} \tag{13}$$

$H_{l,k}^2$ is a channel of the network device 2 on a symbol $l$ and a frequency domain unit $k$, and $H_{0,k}^2$ is a channel of the network device 2 on a symbol 0 and the frequency domain unit $k$.

A deviation between the CFO corresponding to the network device 2 and the CFO corresponding to the network device 1 is $\Delta\varepsilon0$, where $\Delta\varepsilon0$ satisfies a relationship shown in the following formula (14):

$$\Delta\varepsilon0 = \varepsilon_2 - \varepsilon_1 \tag{14}$$

Similarly, a deviation between the SFO corresponding to the network device 2 and the SFO corresponding to the network device 1 is $\Delta\mu0$, where $\Delta\mu0$ satisfies a relationship shown in the following formula (15):

$$\Delta\mu0 = \mu_2 - \mu_1 \tag{15}$$

If $\Delta\varepsilon0 = \Delta\mu0 = 0$, the channel $H_{l,k}^1$ and the channel $H_{l,k}^2$ have a same phase shift relative to the symbol 0, that is $2\pi(\varepsilon_1 + k\mu_1)l = 2\pi(\varepsilon_2 + k\mu_2)l$. In this case, coherent transmission can still be implemented by using a proper weight design.

If $\Delta\varepsilon0 \neq 0$, and $\Delta\mu0 \neq 0$, in the symbol $l$ and the frequency domain unit $k$, the channel between the network device 2 and the terminal satisfies a relationship shown in the following formula (16):

$$H_{l,k}^2 = H_{0,k}^2 e^{j2\pi(\varepsilon_2 + k\mu_2)l} = H_{0,k}^2 e^{j2\pi[(\varepsilon_1 + \Delta\varepsilon0) + k(\mu_1 + \Delta\mu0)]l} \tag{16}$$

It can be learned from the formula (16) that a difference between a phase shift (that is, the phase shift corresponding to the network device 2) of the channel between the network device 2 and the terminal and a phase shift (that is, the phase shift corresponding to the network device 1) of the channel between the network device 1 and the terminal, that is, a phase shift difference $\Delta\varphi$ satisfies a relationship shown in the following formula (17):

$$\Delta\varphi = 2\pi[\Delta\varepsilon0 + k\Delta\mu0]l \tag{17}$$

It can be learned with reference to the formula (17) that $\Delta\varphi$ changes with time and accumulates with time.

Assuming that signals sent by the network device 1 and the network device 2 both include a signal flow 1 and a signal flow 2, a signal (a precoded signal) received by the terminal at a moment $t0$ satisfies a relationship shown in the following formula (18):

$$\boldsymbol{y}_1(t0) = (\boldsymbol{H}^1 \boldsymbol{W}_{11} + \boldsymbol{H}^2 \boldsymbol{W}_{21})\boldsymbol{S}_1 + (\boldsymbol{H}^1 \boldsymbol{W}_{12} + \boldsymbol{H}^2 \boldsymbol{W}_{22})\boldsymbol{S}_2 \tag{18}$$

$\boldsymbol{H}^1$ is a channel between the network device 1 and the terminal, $\boldsymbol{H}^2$ is a channel between the network device 2 and the terminal, $\boldsymbol{W}_{11}$ represents a precoding matrix used by the network device 1 to precode the signal flow 1, $\boldsymbol{W}_{21}$ represents a precoding matrix used by the network device 2 to precode the signal flow 1, $\boldsymbol{W}_{12}$ represents a precoding matrix used by the network device 1 to precode the signal flow 2, and $\boldsymbol{W}_{22}$ represents a precoding matrix used by the network device 2 to precode the signal flow 2. $\boldsymbol{S}_1$ represents the signal flow 1, and $\boldsymbol{S}_2$ represents the signal flow 2.

At a moment elapsing a time length $\Delta t$ after the moment $t_0$, that is, $t0 + \Delta t$, assuming that neither the channel between the network device 1 and the terminal nor the channel between the network device 2 and the terminal is updated, the channel between the network device 1 and the terminal, a precoding matrix between the network device 1 and the terminal, the channel between the network device 2 and the terminal, and a precoding matrix between the network device 2 and the terminal are the same as those at the moment $t_0$. In this case, a signal (a precoded signal) received by the terminal at the moment $t_0 + \Delta t$ satisfies a relationship shown in the following formula (19):

$$\boldsymbol{y}_1(t0 + \Delta t) = (\boldsymbol{H}^1\boldsymbol{W}_{11} + e^{j\Delta\varphi}\boldsymbol{H}^2\boldsymbol{W}_{21})\boldsymbol{S}_1 + (\boldsymbol{H}^1\boldsymbol{W}_{12} + e^{j\Delta\varphi}\boldsymbol{H}^2\boldsymbol{W}_{22})\boldsymbol{S}_2 \tag{19}$$

It is assumed that, at a moment $t_0$, coherent superposition and interference coherent cancellation can be implemented on a signal received by the terminal. In this case, at the moment $t0 + \Delta t$, because a phase corresponding to the network device 2 generates an extra phase shift difference $\Delta\varphi$ relative to a phase corresponding to the network device 1, only partial coherent superposition can be implemented on the signal received by the terminal, and interference cannot be completely canceled. Consequently, CJT transmission performance is affected.

In some possible design solutions, the plurality of network devices that provide services for the terminal in a coordinated manner may send reference signals (reference signals, RSs) to each other, determine a calibration coefficient based on an RS exchanged between the network devices, and compensate, based on the calibration coefficient, for a phase shift difference caused by a clock synchronization error between the two network devices, to implement coherent superposition of signals and cancel interference.

In some possible design solutions, a clock synchronization problem may be resolved by using a hardware design, so as to reduce a phase shift difference caused by a clock synchronization error between different network devices. For example, a coordination board may be disposed in the network device, so that network devices that do not share a clock source share a clock source, or clock synchronization is implemented by upgrading clock hardware, thereby implementing coherent superposition of received signals and canceling interference.

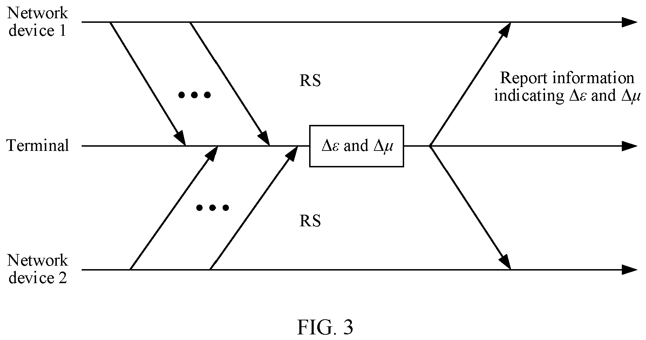

In some possible design solutions, for each of the plurality of network devices that provide services for the terminal in a coordinated manner, the terminal may measure reference signals in a plurality of frequency domain units and a plurality of time domain units. Each frequency domain unit and each time domain unit correspond to one time of measurement, and correspondingly, a phase of a channel in the frequency domain unit and a phase of a channel in the time domain unit may be obtained. The terminal may determine an SFO and an CFO of the network device based on phases that are of a plurality of channels corresponding to network devices and that are obtained through measurement. The following uses an example for description with reference to FIG. 3. As shown in FIG. 3, it is assumed that network devices that provide services for the terminal in a coordinated manner include a network device 1 and a network device 2. The network device 1 sends a plurality of RSs to the terminal (or may send an RS for a plurality of times), and the network device 2 sends a plurality of RSs to the terminal. Correspondingly, the terminal receives the plurality of RSs from the network device 1 and the plurality of RSs from the network device 2. The plurality of RSs sent by the network device 1 are located on a plurality of frequency domain units and a plurality of symbols, and the RSs sent by the network device 2 are located on a plurality of frequency domain units and a plurality of symbols. The terminal determines, based on the plurality of RSs sent by the network device 1, an SFO, that is, $\mu_1$ and a CFO, that is, $\varepsilon_1$, of the signals sent by the network device 1 at the terminal. The terminal determines, based on the plurality of RSs sent by the network device 2, an SFO, that is, $\mu_2$ and a CFO, that is, $\varepsilon_2$, of the signals sent by the network device 2 at the terminal.

Based on $\mu_1, \varepsilon_1, \mu_2$, and $\varepsilon_2$, the terminal may obtain a frequency deviation between an SFO corresponding to the network device 1 and an SFO corresponding to the network device 2, and a frequency deviation between a CFO corresponding to the network device 1 and a CFO corresponding to the network device 2.

A deviation $\Delta\varepsilon$ between the CFO corresponding to the network device 1 and the CFO corresponding to the network device 2 satisfies a relationship shown in the following formula (20):

$$\Delta\varepsilon = \varepsilon_1 - \varepsilon_2 \tag{20}$$

A deviation $\Delta\mu$ between the SFO corresponding to the network device 1 and the SFO corresponding to the network device 2 satisfies a relationship shown in the following formula (21):

$$\Delta\mu = \mu_1 - \mu_2 \tag{21}$$

After obtaining $\Delta\varepsilon$ and $\Delta\mu$, the terminal may send, to at least one of the network device 1 and the network device 2, information indicating phase shift differences corresponding to $\Delta\varepsilon$ and $\Delta\mu$.

The information indicates the phase shift difference corresponding to $\Delta\varepsilon$ and $\Delta\mu$ may include $\Delta\varepsilon$ and $\Delta\mu$, or the phase shift difference corresponding to $\Delta\varepsilon$ and $\Delta\mu$, for example, $2\pi[\Delta\varepsilon + k\Delta\mu]l$ . The network device 1 and/or the network device 2 may perform phase compensation based on the indicated phase shift difference corresponding to $\Delta\varepsilon$ and $\Delta\mu$. For example, if the terminal sends, to the network device 1, information indicating the phase shift difference corresponding to $\Delta\varepsilon$ and $\Delta\mu$, the network device 1 may perform phase compensation based on $\Delta\varphi1 = 2\pi[\Delta\varepsilon + k\Delta\mu]l$. For another example, if the terminal sends, to the network device 2, information indicating $\Delta\varepsilon$ and $\Delta\mu$ , the network device 2 may perform phase compensation based on $\Delta\varphi1 = 2\pi[\Delta\varepsilon + k\Delta\mu]l$. For another example, if the terminal sends, to the network device 1 and the network device 2, information indicating $\Delta\varepsilon$ and $\Delta\mu$, the network device 1 may perform phase compensation, the network device 2 may perform phase compensation, or the network device 1 and the network device 2 separately perform phase compensation.

For example, for the foregoing $\Delta\varphi 1$, the network device 2 may multiply the phase shift by a precoding vector for compensation. A compensated signal is shown in the following formula (22):

$$\boldsymbol{y}_1(t0 + \Delta t) = (\boldsymbol{H}^1\boldsymbol{W}_{11} + e^{j\Delta\varphi 1}e^{j\Delta\varphi}\boldsymbol{H}^2\boldsymbol{W}_{21})\boldsymbol{S}_1 + (\boldsymbol{H}^1\boldsymbol{W}_{12} + e^{j\Delta\varphi 1}e^{j\Delta\varphi}\boldsymbol{H}^2\boldsymbol{W}_{22})\boldsymbol{S}_2 \quad (22)$$

A principle of phase compensation is not described herein.

In addition, in an actual communication process, in addition to a phase offset between the network device and the terminal caused by the SFO and the CFO, a frequency offset caused by a multipath delay and a frequency offset caused by a Doppler effect also cause a phase offset between the network device and the terminal. In this case, a principle of phase compensation is similar to a principle of phase compensation when only the SFO and the CFO are considered. The difference lies in that, when the frequency offset caused by the multipath delay and the frequency offset caused by the Doppler effect are considered, $\mu_1$ further includes the frequency offset caused by the multipath delay, $\varepsilon_1$ further includes the frequency offset caused by the Doppler effect, $\mu_2$ further includes the frequency offset caused by the multipath delay, and $\varepsilon_2$ further includes the frequency offset caused by the Doppler effect.

For ease of understanding, the following uses an example in which the network device 1 and the network device 2 send signals on a symbol 0, a symbol 1, and a frequency domain unit 0 to a frequency domain unit K to describe how to determine $\mu_1$, $\varepsilon_1$, $\mu_2$, and $\varepsilon_2$.

It is assumed that a phase difference $\Delta\theta$ between two channels between a same network device and a terminal satisfies a relationship shown in the following formula (23):

$$\Delta\theta = 2\pi(\varepsilon + k\mu)\Delta l\Delta_t \qquad (23)$$

$\mu$ is an SFO corresponding to the network device, $\varepsilon$ is a CFO corresponding to the network device, $\Delta l$ is a quantity of symbols between two channels, and $\Delta_t$ is a time length between two adjacent symbols in time domain.

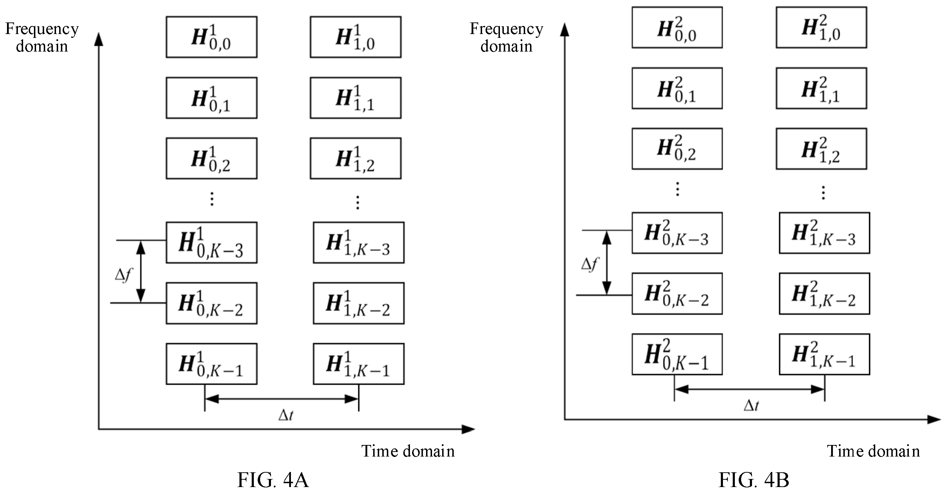

As shown in FIG. 4A, a channel between the network device 1 and the terminal on a symbol $l$ and a frequency domain unit $k$ is $\boldsymbol{H}^1_{l,k}$, a phase of $\boldsymbol{H}^1_{l,k}$ may be obtained by measuring an RS on the symbol $l$ and the frequency domain unit $k$, a phase of $\boldsymbol{H}^1_{0,k}$ may be obtained by measuring an RS on a symbol 0 and the frequency domain unit $k$, a phase of $\boldsymbol{H}^1_{1,k}$ may be obtained by measuring an RS on a symbol 1 and the frequency domain unit $k$, and a phase shift $\Delta\theta^1_k$ between channels corresponding to two adjacent symbols on the frequency domain unit $k$ of the network device 1 satisfies a relationship shown in the following formula (24):

$$\Delta\theta^1_k = \theta^1_{1,k} - \theta^1_{0,k} \qquad (24)$$

$\theta^1_{0,k}$ is a phase of $\boldsymbol{H}^1_{0,k}$, and $\theta^1_{1,k}$ is a phase of $\boldsymbol{H}^1_{1,k}$.

According to the formula (24), $\Delta\theta^1_0$, $\Delta\theta^1_1$, $\Delta\theta^1_3$, ..., $\Delta\theta^1_{K-3}$, $\Delta\theta^1_{K-2}$, and $\Delta\theta^1_{K-1}$ may be obtained.

Therefore, according to the formula (23), a phase shift between $\boldsymbol{H}^1_{0,k}$ and $\boldsymbol{H}^1_{1,k}$ on a same frequency domain unit k may be $\Delta\theta^1_k$, and $\Delta\theta^1_k$ satisfies a relationship shown in the following formula (25):

$$\Delta\theta^1_k = 2\pi\varepsilon_1\Delta l + 2\pi k\mu_1\Delta l \qquad (25)$$

$\varepsilon_1$ and $\mu_1$ may be correspondingly obtained by separately substituting $\Delta\theta^1_0$, $\Delta\theta^1_1$, and $\Delta\theta^1_{K-1}$ into the formula (25).

As shown FIG. 4B, a channel between the network device 2 and the terminal on a symbol $l$ and a frequency domain unit $k$ is $\boldsymbol{H}^2_{l,k}$, a phase of $\boldsymbol{H}^2_{l,k}$ may be obtained by measuring an RS on the symbol $l$ and the frequency domain unit $k$, a phase of $\boldsymbol{H}^2_{0,k}$ may be obtained by measuring an RS on a symbol 0 and the frequency domain unit $k$, a phase of $\boldsymbol{H}^2_{1,k}$ may be obtained by measuring an RS on a symbol 1 and the frequency domain unit $k$, and a phase shift $\Delta\theta^2_k$

between channels corresponding to two adjacent symbols on the frequency domain unit $k$ of the network device 2 satisfies a relationship shown in the following formula (26):

$$\Delta\theta_k^2 = \theta_{1,k}^2 - \theta_{0,k}^2 \tag{26}$$

$\theta_{0,k}^2$ is a phase of $\boldsymbol{H}_{0,k}^2$, and $\theta_{1,k}^2$ is a phase of $\boldsymbol{H}_{1,k}^2$.

According to the formula (26), $\Delta\theta_0^2$, $\Delta\theta_1^2$, $\Delta\theta_3^2$, ..., $\Delta\theta_{K-3}^2$, $\Delta\theta_{K-2}^2$, and $\Delta\theta_{K-1}^2$ may be obtained.

Therefore, according to the formula (23), a phase shift between $\boldsymbol{H}_{0,k}^2$ and $\boldsymbol{H}_{1,k}^2$ on a same frequency domain unit k may be $\Delta\theta_k^2$, and $\Delta\theta_k^2$ satisfies a relationship shown in the following formula (27):

$$\Delta\theta_k^2 = 2\pi\varepsilon_2\Delta l + 2\pi k\mu_2\Delta l \tag{27}$$

$\varepsilon_2$ and $\mu_2$ may be correspondingly obtained by separately substituting $\Delta\theta_0^2$, $\Delta\theta_1^2$, $\Delta\theta_3^2$, ..., $\Delta\theta_{K-3}^2$, $\Delta\theta_{K-2}^2$, and $\Delta\theta_{K-1}^2$ into the formula (27).

It should be understood that the foregoing calculation methods (such as a linear regression method) of $\varepsilon_1$, $\mu_1$, $\varepsilon_2$, and $\mu_2$ are merely used as examples. In an actual implementation, another method may be used to obtain $\varepsilon_1$, $\mu_1$, $\varepsilon_2$, and $\mu_2$. Details are not described herein.

In the foregoing solution for performing phase compensation, only a phase shift between the plurality of network devices caused by a time change, that is, a phase shift between a moment at which a downlink signal is transmitted (which may also be referred to as a precoding moment) and a moment used as a reference, for example, phase a shift between the moments $t0 + \Delta t$ and $t_0$, is considered. However, the network device does not compensate for a difference at a moment used as a reference such as the moment $t_0$, for example, a moment. As a result, a phase compensated for by the device is not accurate enough.

It should be understood that, in embodiments of this application, meanings indicated by same symbols are the same, and details are not described subsequently.

The following describes technical solutions in this application with reference to accompanying drawings.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system such as a long term evolution (long term evolution, LTE) system and a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design solution described as an "example" in this application should not be explained as being more preferred or having more advantages than another embodiment or design solution. Exactly, the use of the word example is intended to present the concept in a specific manner.

First, in this application, "indicate" may include "directly indicate" and "indirectly indicate". When a specific piece of "information" is described to indicate A, the information may directly indicate A or indirectly indicate A, but it does not indicate that the information definitely carries A.

Information indicated by information is referred to as to-be-indicated information. In a specific implementation process, there are a plurality of manners of indicating the to-be-indicated information, for example, but not limited to, the following manners: The to-be-indicated information may be directly indicated. For example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement order of a plurality of pieces of information that is pre-agreed on (for example, stipulated in a protocol), to reduce indication overheads to some extent. In addition, a common part of all pieces of information may be identified and indicated together, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. Details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can cause a to-be-indicated party to learn of to-be-indicated information.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device. The configuration information may include, for example, but not limited to, one or a combination of at least two of radio resource control (radio resource control, RRC) signaling, medium access control (medium access control, MAC) layer signaling, and physical layer signaling. The MAC layer signaling includes, for example, a MAC control element (control element, CE). The physical (physical, PHY) layer signaling includes, for example, downlink control information (downlink control information, DCI).

Second, in the following embodiments, first, second, and various numbering are merely used for distinguishing for ease of description, and are not intended to limit the scope of embodiments of this application, for example, for distinguishing between different indication information.

Third, "preset", "predefined", or "preconfigured" may be implemented by pre-storing corresponding code, a corresponding table, or another manner that may be used to indicate related information in a device (for example, including a terminal device and a network device), or may be pre-specified in a protocol. A specific implementation of the device is not limited in this application. "Storage" may mean storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in this application.

Fourth, the "protocol" in embodiments of this application may be a standard protocol in the communication field, for example, may include a 3GPP LTE protocol (for example, a technical specification in the TS 36 series), an NR protocol (for example, a technical specification in the TS 38 series), and a related protocol applied to a future communication system. This is not limited in this application.

A network architecture and a service scenario described in embodiments of this application are intended to describe the technical solutions in embodiments of this application more clearly, and do not constitute a limitation on the technical solutions provided in embodiments of this application. A person of ordinary skill in the art may learn that, with evolution of the network architecture and the emergence of new service scenarios, the technical solutions provided in embodiments of this application are also applicable to similar technical problems.

A network architecture and a service scenario described in embodiments of this application are intended to describe the technical solutions in embodiments of this application more clearly, and do not constitute a limitation on the technical solutions provided in embodiments of this application. A person of ordinary skill in the art may learn that, with evolution of the network architecture and the emergence of new service scenarios, the technical solutions provided in embodiments of this application are also applicable to similar technical problems.

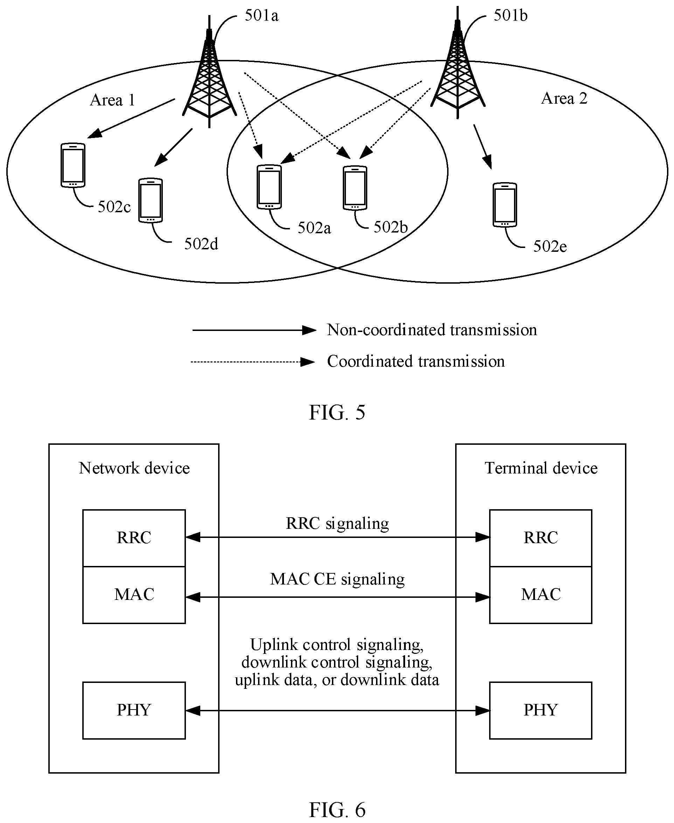

For ease of understanding embodiments of this application, a communication system shown in FIG. 5 is first used as an example to describe in detail a communication system applicable to embodiments of this application. For example, FIG. 5 is a diagram of an architecture of a communication system to which a method according to an embodiment of this application is applicable.

As shown in FIG. 5, the communication system includes a network device and a terminal.

For example, the network device may include a network device 501a and a network device 501b, and the terminal may include a terminal 502a to a terminal 502e. The terminal may be connected to the network device in a wireless manner, and a network may be connected to a core network (not shown in FIG. 5) in a wired or wireless manner.

A coverage area of the network device 501a is an area 1, a coverage area of the network device 501b is an area 2, the terminals 502a to 302d are located in the area 1, and the terminal 502a, the terminal 502b, and the terminal 502e are located in the area 2. The terminal 502a and the terminal 502b are located in an overlapping area between the area 1 and the area 2. For a terminal (the terminal 502a or the terminal 502b) in the overlapping area of the area 1 and the area 2, the network device 501a and the network device 501b may perform coordinated transmission. For a terminal (for example, the terminal 502c or the terminal 502d) in the area 1, the network device 501a may perform non-coordinated transmission. For a terminal (for example, the terminal 502e) in the area 2, the network device 501a may perform non-coordinated transmission.

The terminal may be a terminal having receiving and sending functions, or may be a chip or a chip system disposed in the terminal. The terminal may also be referred to as user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine-type communication (machine-type communication, MTC) terminal, a computer having a wireless sending and receiving function, a virtual reality (virtual reality, VR) terminal, an augmented reality (augmented reality, AR) terminal, a smart home device (for example, a refrigerator, a television, an air conditioner, or a meter), a smart robot, a robot arm, a workshop device, a wireless terminal in self driving, a wireless terminal in industrial control (industrial control), a wireless terminal in self-driving (self-driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) or the like having a terminal function, a flight device (for example, a smart robot, a hot air balloon, an uncrewed aerial vehicle, or an airplane), or the like. The terminal in this application may alternatively be a vehicle-mounted module, a vehicle-mounted assembly, a vehicle-mounted component, a vehicle-mounted chip, or a vehicle-mounted unit that is disposed in a vehicle as one or more components or units. The terminal may alternatively be another device having a terminal function. For example, the terminal may be a device that undertakes a terminal function in D2D communication. A device form of the terminal is not limited in embodiments of this application. An apparatus configured to implement a function of the terminal may be a terminal device, or may be an apparatus that can support the terminal device in implementing the function, for example, a chip system. The apparatus may be mounted in the terminal device or used in a manner of matching the terminal device. In this embodiment of this application, the chip system may include a chip, or may include a chip and another discrete component.

The network device may be a device having a wireless transceiver function, or may be a chip or a chip system disposed in the device, and is located in an access network (access network, AN) of the communication system, to provide an access service for the terminal. For example, the network device may be referred to as a radio access network (radio access network, RAN) device, and may be specifically an access network device in a next-generation mobile communication system, for example, a 6G mobile communication system. For example, the network device may be a 6G base station. Alternatively, in the next-generation mobile communication system, the network device may be named in another manner, which falls within the protection scope of embodiments of this application. This is not limited in this application. Alternatively, the network device may include a gNB in 5G, for example, a new radio (new radio, NR) system, may include one or a group of antenna panels (including a plurality of antenna panels) of a base station in 5G, or may be a network node that forms a gNB, a transmission point (transmission and reception point, TRP, or transmission point, TP), or a transmission measurement function (transmission measurement function, TMF). For example, the network device may be a central unit (central unit, CU), a distributed unit (distributed unit, DU), a CU-control plane (control plane, CP), a CU-user plane (user plane, UP), a radio unit (radio unit, RU), an RSU having a base station function, a wired access gateway, or a 5G core network element. Alternatively, the network device may include an access point (access point, AP), a wireless relay node, a wireless backhaul node, macro base stations in various forms, a micro base station (also referred to as a small cell), a relay station, an access point, a wearable device, a vehicle-mounted device, and the like in a wireless fidelity (wireless fidelity, Wi-Fi) system.

The CU and the DU may be separately disposed, or may be included in a same network element, for example, a baseband unit (baseband unit, BBU). The RU may be included in a radio frequency device or a radio frequency unit, for example, a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein. In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module. A form of the network device is not limited in embodiments of this application. An apparatus for implementing a function of the network device may be a network device, or may be an apparatus, for example, a chip system, that can support the network device in implementing the function. The apparatus may be mounted in the network device or used in a manner of matching the network device.

As shown in FIG. 6, the network device includes an RRC signaling exchange module (RRC in FIG. 6), a MAC signaling exchange module (MAC in FIG. 6), and a PHY signaling and data exchange module (PHY in FIG. 6). The terminal includes an RRC signaling exchange module, a MAC signaling exchange module, and a PHY signaling and data exchange module.

The network device and the terminal may exchange RRC signaling by using an RRC signaling exchange module. The network device and the terminal may exchange MAC CE signaling by using a MAC signaling exchange module. The network device and the terminal may exchange one or more of the following by using a PHY exchange module: uplink control signaling, downlink control signaling (such as DCI), uplink data, and downlink data.

It should be noted that the phase compensation method provided in embodiments of this application is applicable to nodes shown in FIG. 5. For specific implementation, refer to the following method embodiments. Details are not described herein.

It should be noted that the solutions in embodiments of this application may also be applied to another communication system, and a corresponding name may also be replaced with a name of a corresponding function in the another communication system.

It should be understood that FIG. 5 is merely a simplified diagram used as an example for ease of understanding. The communication system may further include another network device and/or another terminal that are/is not drawn in FIG. 5.

Based on the communication system provided in FIG. 5, embodiments of this application provide a phase compensation method. The phase compensation method includes: Each of at least two network devices sends an RS set to a terminal. The terminal receives the at least two reference signal sets, where each of the at least two reference signal sets includes at least one reference signal. The terminal sends first information based on the at least two reference signal sets, where the first information indicates a corresponding phase variation between reference signal sets in the at least two reference signal sets at a first moment. Each of the at least two network devices receives the first information, and performs phase compensation based on the first information, to improve phase compensation accuracy.

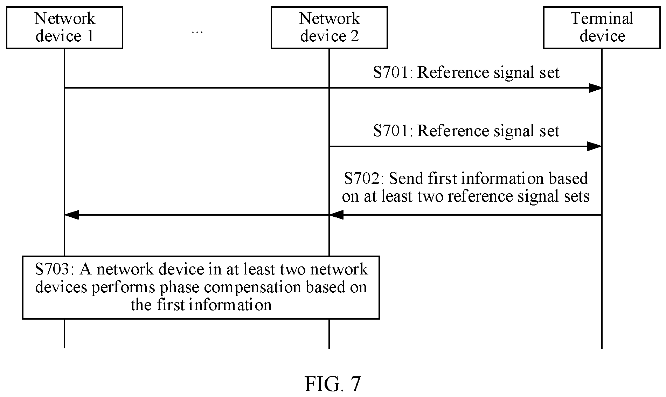

The following specifically describes the phase compensation method provided in embodiments of this application with reference to FIG. 7 to FIG. 14A to FIG. 14C.

For example, FIG. 7 is a schematic flowchart of a phase compensation method according to an embodiment of this application. The phase compensation method is applicable to communication between two nodes shown in FIG. 5.

As shown in FIG. 7, the phase compensation method includes the following steps.

S701: Each of at least two network devices sends an RS set to a terminal. Correspondingly, the terminal receives the at least two RS sets.

Each of the at least two RS sets includes at least one RS.

Each of the at least two RS sets corresponds to one network device. In other words, one RS set includes an RS sent by a network device corresponding to the RS set. In other words, each of the at least two network devices sends one RS set. The RS set may be understood as an RS set corresponding to the network device. For example, FIG. 7 shows that a network device 1 and a network device 2 separately send respective RS sets to a terminal device.

The at least two RS sets are RS sets corresponding to each of the at least two network devices.

An example in which the at least two network devices include four network devices is used. Correspondences between the network devices and RS sets are shown in the following Table 1.

Table 1

| Network device | Network device 1 | Network device 2 | Network device 3 | Network device 4 |
|---|---|---|---|---|
| RS set | RS set 1 | RS set 2 | RS set 3 | RS set 4 |

In a possible design solution, an RS in each of the at least two RS sets is carried on an RS resource in a same RS resource set. The RS resource set includes a plurality of RS resources.

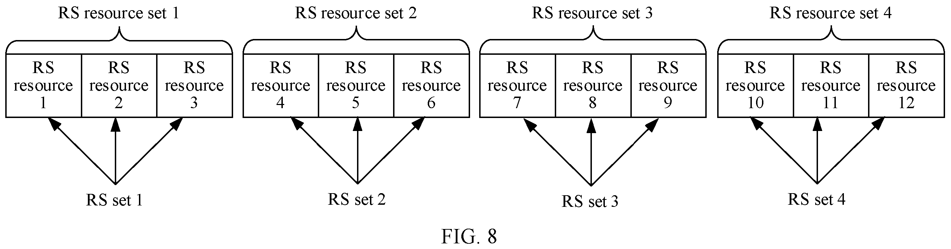

The following uses an example for description with reference to Table 1. It is assumed that the at least two network devices include the network device 1 to the network device 4, and an RS set corresponding to each of the at least two network devices is shown in Table 1. The RS set 1 to the RS set 4 sequentially correspond to an RS resource set 1 to an RS resource set 4. As shown in FIG. 8, the RS resource set 1 includes an RS resource 1 to an RS resource 3, the RS resource set 2 includes an RS resource 4 to an RS resource 6, the RS resource set 3 includes an RS resource 7 to an RS resource 9, and the RS resource set 4 includes an RS resource 10 to an RS resource 12. In this case, an RS in the RS set 1 is carried on the RS resource 1 to the RS resource 3; an RS in the RS set 2 is carried on the RS resource 4 to the RS resource 6; an RS in the RS set 3 is carried on the RS resource 7 to the RS resource 9; and the RS in the RS set 4 is carried on the RS resource 10 to the RS resource 12. In this case, a diagram of a relationship between an RS resource set, an RS resource, and an RS set is shown in Table 2.

Table 2

| RS resource set | RS resource | RS set |
|---|---|---|
| RS resource set 1 | RS resource 1 | RS set 1 |
| | RS resource 2 | |
| | RS resource 3 | |
| RS resource set 2 | RS resource 4 | RS set 2 |
| | RS resource 5 | |
| | RS resource 6 | |
| RS resource set 3 | RS resource 7 | RS set 3 |
| | RS resource 8 | |
| | RS resource 9 | |
| RS resource set 4 | RS resource 10 | RS set 4 |
| | RS resource 11 | |
| | RS resource 12 | |

It may be understood that, in this case, one RS resource in each RS resource set corresponds to one time of signal measurement, in other words, signal measurement of one network device may be performed once on each RS resource occupied by an RS of the network device. In this embodiment of this application, when the RS is a channel state information-reference signal (channel state information-reference signal, CSI-RS), signal measurement is measurement on the CSI-RS.

With reference to the example in FIG. 8, the RS resource 1 to the RS resource 3 in the RS resource set 1 each correspond to one time of signal measurement.

Optionally, in a plurality of RS resources in a same RS resource set, a same port index corresponds to a same port; and/or, a plurality of RS resources in a same RS resource set are quasi colocated.

A port corresponding to a port index is a port indicated by the port index. That the same port index corresponds to the same port means that ports corresponding to the same port index are the same.

The plurality of RS resources in the RS resource set are quasi colocated (quasi colocation, QCL). In other words, the plurality of RS resources in the RS resource set have same quasi colocation information. For example, that the plurality of RS resources in the RS resource set are quasi colocated may be that large-scale features and/or small-scale features of the plurality of RS resources in the RS resource set are the same.

Still with reference to the RS resource set 1 in the reference resource shown in FIG. 8, in the RS resource 1 to the RS resource 3, a same port index corresponds to a same port. For example, a port index x in the RS resource 1 and a port index x in the RS resource 2 correspond to a same port, the port index x in the RS resource 1 and a port index x in the RS resource 3 correspond to a same port, and the port index x in the RS resource 2 and the port index x in the RS resource 3 correspond to a same port.

Similarly, with reference to the example of the RS resource set 1 in the reference resource shown in FIG. 8, in the RS resource set 1, the RS resource 1 and the RS resource 2 are quasi colocated, the RS resource 1 and the RS resource 3 are quasi colocated, and the RS resource 2 and the RS resource 3 are quasi colocated.

In this way, accuracy of a phase shift measured by the terminal can be improved, to further improve phase compensation accuracy.

In a possible design solution, RSs in different RS sets in the at least two RS sets are respectively carried on RS resources in different RS resource sets. In other words, an RS in each of the at least two RS sets is carried on an RS resource in one RS resource set. The RS resource set includes one RS resource.

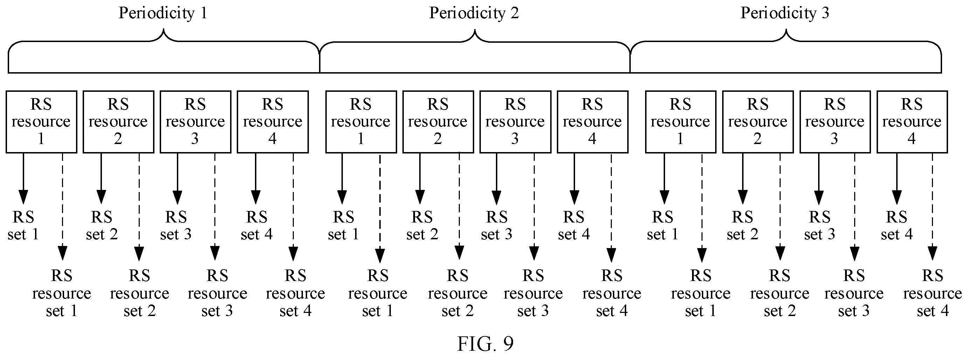

In this case, the RS resource set is periodically configured or semi-periodically configured, and an RS in one RS set is carried on an RS resource in a plurality of periodicities in one RS resource set. For example, RS resource sets include an RS resource set 1 to an RS resource set 4, the RS resource set 1 includes an RS resource 1, the RS resource set 2 includes an RS resource 2, the RS resource set 3 includes an RS resource 3, and the RS resource set 4 includes an RS resource 4. A correspondence between a periodicity, an RS resource set, an RS resource, and an RS set is shown in Table 3. FIG. 9 is a diagram of a relationship between a periodicity, an RS resource set, an RS resource, and an RS set.

Table 3

| Periodicity | RS resource set | RS resource | RS set |
|---|---|---|---|
| Periodicity 1 | RS resource set 1 | RS resource 1 | RS set 1 |
| | RS resource set 2 | RS resource 2 | RS set 2 |
| | RS resource set 3 | RS resource 3 | RS set 3 |
| | RS resource set 4 | RS resource 4 | RS set 4 |
| Periodicity 2 | RS resource set 1 | RS resource 1 | RS set 1 |
| | RS resource set 2 | RS resource 2 | RS set 2 |
| | RS resource set 3 | RS resource 3 | RS set 3 |
| | RS resource set 4 | RS resource 4 | RS set 4 |
| Periodicity 3 | RS resource set 1 | RS resource 1 | RS set 1 |
| | RS resource set 2 | RS resource 2 | RS set 2 |
| | RS resource set 3 | RS resource 3 | RS set 3 |
| | RS resource set 4 | RS resource 4 | RS set 4 |

In a possible design, an RS in each of the at least two RS sets is carried on RS resources in a plurality of RS resource sets.

In other words, an RS resource in each of the plurality of RS resource sets is used to carry an RS in a same RS set.

With reference to the RS resource set and the RS set in Table 1, it is assumed that an RS resource set 1 includes an RS resource 1 to an RS resource 4, an RS resource set 2 includes an RS resource 5 to an RS resource 8, and an RS resource set 3 includes an RS resource 9 to an RS resource 12. In this case, an RS set 1 is carried on the RS resource 1, the RS resource 5, and the RS resource 9; an RS set 2 is carried on the RS resource 2, the RS resource 6, and the RS resource 10; an RS set 3 is carried on the RS resource 3, the RS resource 7, and the RS resource 11; and an RS set 4 is carried on the RS resource 4, the RS resource 8, and the RS resource 12. A correspondence between an RS resource set, an RS resource, and an RS set is shown in Table 4.

Table 4

| RS resource set | RS resource | RS set |
|---|---|---|
| RS resource set 1 | RS resource 1 | RS set 1 |
| | RS resource 2 | RS set 2 |
| | RS resource 3 | RS set 3 |
| | RS resource 4 | RS set 4 |
| RS resource set 2 | RS resource 5 | RS set 1 |
| | RS resource 6 | RS set 2 |
| | RS resource 7 | RS set 3 |
| | RS resource 8 | RS set 4 |
| RS resource set 3 | RS resource 9 | RS set 1 |
| | RS resource 10 | RS set 2 |
| | RS resource 11 | RS set 3 |
| | RS resource 12 | RS set 4 |

Optionally, in each of the plurality of RS resource sets, there is at least one RS resource having a same resource identifier.

The resource identifier is an identifier used to represent an RS resource, and the resource identifier may also be referred to as a resource index or another name. Details are not described herein. It should be understood that RS resources having a same resource identifier in different RS resource sets are used to carry an RS in a same RS set.

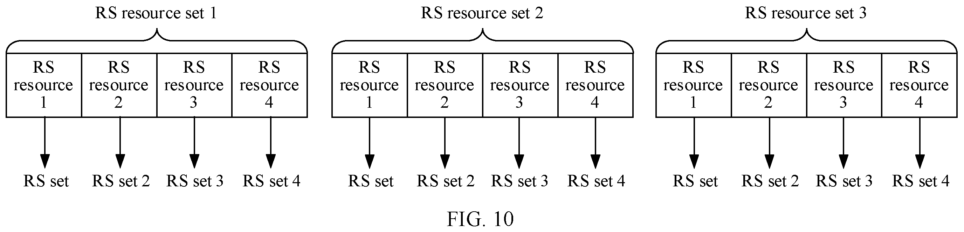

As shown in FIG. 10, assuming that the plurality of RS resource sets include an RS resource set 1 to an RS resource set 3, the RS resource set 1 to the RS resource set 3 each include an RS resource 1, that is, an RS resource whose resource identifier is "1". With reference to the example of the RS set in Table 1, the RS resource set 1 to the RS resource set 3 each further includes an RS resource 2, that is, an RS resource whose resource identifier is "2". The RS resource set 1 to the RS resource set 3 each further includes an RS resource 3, that is, an RS resource whose resource identifier is "3". The RS resource set 1 to the RS resource set 3 each further includes an RS resource 4, that is, an RS resource whose resource identifier is "4". In this case, an RS set 1 is carried on RS resources 1 in the RS resource set 1 to the RS resource set 3, an RS set 2 is carried on RS resources 2 in the RS resource set 1 to the RS resource set 3, an RS set 3 is carried on RS resources 3 in the RS resource set 1 to the RS resource set 3, and an RS set 4 is carried on RS resources 4 in the RS resource set 1 to the RS resource set 3. It may be understood that the relationship between the RS set and the RS resource carrying the RS set herein is merely used as an example. In an actual implementation, there may be another implementation. For example, the RS set 1 is carried on the RS resources 2 in the RS resource set 1 to the RS resource set 3. Details are not described herein again. A correspondence between an RS resource set, an RS resource, and an RS set is shown in Table 5.

Table 5

| RS resource set | RS resource | RS set |
|---|---|---|
| RS resource set 1 | RS resource 1 | RS set 1 |
| | RS resource 2 | RS set 2 |
| | RS resource 3 | RS set 3 |
| | RS resource 4 | RS set 4 |
| RS resource set 2 | RS resource 1 | RS set 1 |
| | RS resource 2 | RS set 2 |
| | RS resource 3 | RS set 3 |
| | RS resource 4 | RS set 4 |
| RS resource set 3 | RS resource 1 | RS set 1 |
| | RS resource 2 | RS set 2 |
| | RS resource 3 | RS set 3 |
| | RS resource 4 | RS set 4 |

Alternatively, optionally, RS resources in the plurality of RS resource sets are arranged in an order of resource identifiers, and same port indexes of RS resources that are in different RS resource sets and that have a same arrangement ranking correspond to a same port; and/or RS resources that are in different RS resource sets and that have a same arrangement ranking are quasi colocated.

That the RS resources in the plurality of RS resource sets are arranged in the order of the resource identifiers may include: The RS resources in the plurality of RS resource sets are arranged in ascending order of the resource identifiers, or arranged in descending order of the resource identifiers. It should be understood that the RS resources in the plurality of RS resource sets are arranged according to another arrangement rule and based on the resource identifiers, and details are not described herein.

Same port indexes of RS resources that are in different RS resource sets and that have a same arrangement ranking corresponds to a same port, that is, same port indexes of $m^{th}$ RS resources in different RS resource sets correspond to a same port. RS resources that are in different RS resource sets and that have a same arrangement ranking are quasi colocated, that is, $m^{th}$ RS resources in the different RS resource sets are quasi colocated. m is a positive integer. m is a positive integer.

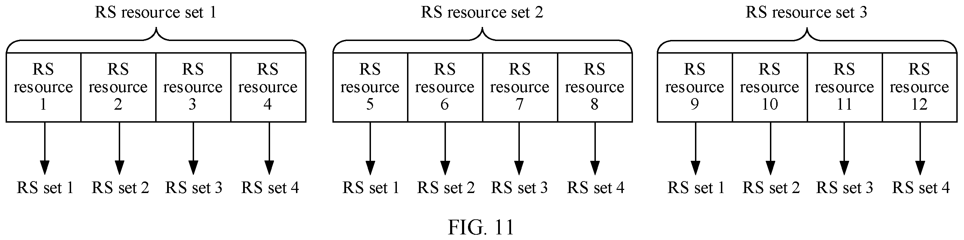

For ease of understanding, the following uses an example, with reference to the RS resource set shown in Table 1, in which the RS resource sets in the plurality of RS resource sets are arranged in ascending order of the resource identifiers to describe a correspondence between an RS resource set, an RS set, and an RS resource in this case. As shown in FIG. 11, it is assumed that an RS resource set 1 includes an RS resource 1 to an RS resource 4, an RS resource set 2 includes an RS resource 5 to an RS resource 8, and an RS resource set 3 includes an RS resource 9 to an RS resource 12. In this case, an RS set 1 is carried on the RS resource 1, the RS resource 5, and the RS resource 9; an RS set 2 is carried on the RS resource 2, the RS resource 6, and the RS resource 10; an RS set 3 is carried on the RS resource 3, the RS resource 7, and the RS resource 11; and an RS set 4 is carried on the RS resource 4, the RS resource 8, and the RS resource 12. A correspondence between an RS resource set, an RS resource, and an RS set is shown in Table 4. In the RS resource 1, the RS resource 5, and the RS resource 9, a same port index corresponds to a same port. In the RS resource 2, the RS resource 6, and the RS resource 10, a same port index corresponds to a same port. In the RS resource 3, the RS resource 7, and the RS resource 11, a same port index corresponds to a same port. In the RS resource 4, the RS resource 8, and the RS resource 12, a same port index corresponds to a same port. The RS resource 1, the RS resource 5, and the RS resource 9 are quasi colocated. The RS resource 2, the RS resource 6, and the RS resource 10 are quasi colocated. The RS resource 3, the RS resource 7, and the RS resource 11 are quasi colocated. The RS resource 4, the RS resource 8, and the RS resource 12 are quasi colocated.

It should be understood that resource identifiers of RS resources in different RS sets may be inconsecutive. The following uses an example for description with reference to the RS resource set shown in Table 1. A correspondence between an RS resource set, an RS resource, and an RS set is shown in Table 6. In the RS resource 2, the RS resource 9, and the RS resource 14, a same port index corresponds to a same port. In the RS resource 4, the RS resource 10, and the RS resource 15, a same port index corresponds to a same port. In the RS resource 6, the RS resource 11, and the RS resource 16, a same port index corresponds to a same port. In the RS resource 8, the RS resource 12, and the RS resource 17, a same port index corresponds to a same port.

Table 6

| RS resource set | RS resource | RS set |
|---|---|---|
| RS resource set 1 | RS resource 2 | RS set 1 |
| | RS resource 4 | RS set 2 |
| | RS resource 6 | RS set 3 |
| | RS resource 8 | RS set 4 |
| RS resource set 2 | RS resource 9 | RS set 1 |
| | RS resource 10 | RS set 2 |
| | RS resource 11 | RS set 3 |
| | RS resource 12 | RS set 4 |
| RS resource set 3 | RS resource 14 | RS set 1 |
| | RS resource 15 | RS set 2 |
| | RS resource 16 | RS set 3 |
| | RS resource 17 | RS set 4 |

The RS resource 2, the RS resource 9, and the RS resource 14 are quasi colocated. The RS resource 4, the RS resource 10, and the RS resource 15 are quasi colocated. The RS resource 6, the RS resource 11, and the RS resource 16 are quasi colocated. The RS resource 8, the RS resource 12, and the RS resource 17 are quasi colocated.

In this way, accuracy of a phase shift measured by the terminal can be improved, to further improve phase compensation accuracy.

In a possible design solution, an RS in each of the at least two RS sets is carried on an RS resource in a same RS resource set.

The RS resource set includes a plurality of RS resources, and RSs in different RS sets are carried on different RS resources.

In this case, the RS resource set is periodically configured or semi-periodically configured, and an RS in one RS set is carried on an RS resource in a plurality of periodicities in one RS resource set.

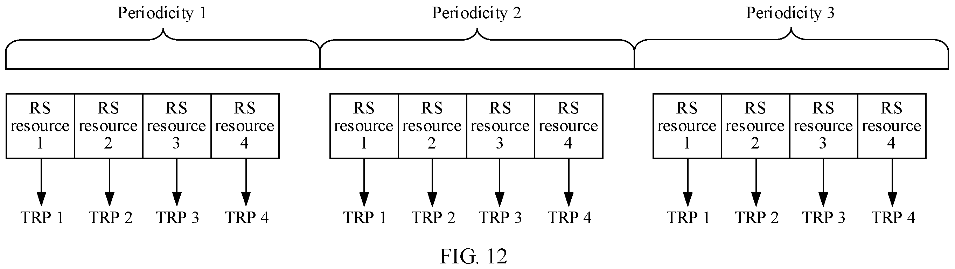

The following uses an example for description with reference to Table 1. As shown in FIG. 12, it is assumed that an RS resource set is configured in a periodicity 1 to a periodicity 3, and the RS resource set includes RS resources 1 to RS resources 4. In this case, an RS in an RS set 1 is carried on the RS resources 1 that are in the RS resource set and that are in the periodicity 1 to the periodicity 3; an RS in an RS set 2 is carried on the RS resources 2 that are in the RS resource set and that are in the periodicity 1 to the periodicity 3; an RS in an RS set 3 is carried on the RS resources 3 that are in the RS resource set and that are in the periodicity 1 to the periodicity 3; and an RS in an RS set 4 is carried on the RS resources 4 that are in the RS resource set and that are in the periodicity 1 to the periodicity 3. It should be understood that the RS resources carrying the RS in the RS set herein is merely used as an example. In an actual implementation, there may be another possible implementation. For example, the RS in the RS set 1 is carried on the RS resources 2 that are in the RS resource set and that are in the periodicity 1 to the periodicity 3. Details are not described herein. A correspondence between a periodicity, an RS resource set, an RS resource, and an RS set is shown in Table 7.

Table 7

| Periodicity | RS resource set | RS resource | RS set |
|---|---|---|---|
| Periodicity 1 | RS resource set 1 | RS resource 1 | RS set 1 |
| | | RS resource 2 | RS set 2 |
| | | RS resource 3 | RS set 3 |
| | | RS resource 4 | RS set 4 |
| Periodicity 2 | RS resource set 1 | RS resource 1 | RS set 1 |
| | | RS resource 2 | RS set 2 |
| | | RS resource 3 | RS set 3 |
| | | RS resource 4 | RS set 4 |
| Periodicity 3 | RS resource set 1 | RS resource 1 | RS set 1 |
| | | RS resource 2 | RS set 2 |
| | | RS resource 3 | RS set 3 |
| | | RS resource 4 | RS set 4 |

S702: The terminal sends first information based on the at least two RS sets. Correspondingly, each of the at least two network devices receives the first information that is sent by the terminal based on the at least two RS sets.

It may be understood that, after receiving the at least two RS sets, the terminal may measure, based on each of the at least two RS sets, a phase corresponding to an RS in the RS set, to obtain, based on a difference between phases corresponding to RSs in two RS sets, a phase difference corresponding to the two RS sets at a first moment, that is, phases corresponding to network devices that send the RS sets. In this embodiment of this application, sending an RS set means sending an RS in the RS set. The phase corresponding to the RS set is a phase corresponding to a network device that sends the RS set.

The first information indicates a corresponding phase variation between RS sets in the at least two RS sets at the first moment. The first moment is a moment used as a reference.

A corresponding phase variation between RS sets in the at least two RS sets is a corresponding phase variation between network devices in the at least two network devices, in other words, may be a difference between phase shifts of the network devices in the at least two network devices.

A corresponding phase variation between RS sets in the at least two RS sets at the first moment is a difference between phase shifts of network devices in the at least two network devices at the first moment. It should be understood that a phase shift of a network device at the first moment is a difference between a phase of the network device at the first moment and a phase of the network device at a second moment.

The second moment is a moment at which each of the at least two network devices has a same phase.

The following uses an example for description with reference to a network device 1 and a network device 2. A phase shift between a phase of the network device 1 at the first moment and a phase of the network device 1 at the second moment is $\varphi 11$, that is, a network device, and a phase shift between a phase of the network device 2 at the first moment and a phase of the network device 2 at the second moment is $\varphi 12$. In this case, the corresponding phase variation between the RS sets in the at least two RS sets at the first moment is $\varphi 12 - \varphi 11$.

In this case, that the corresponding phase variation between the RS sets in the at least two RS sets at the first moment is $\varphi 12 - \varphi 11$ is merely used as an example. In an actual implementation, the phase variation corresponding to the RS sets in the at least two RS sets at the first moment may alternatively be $\varphi 12 - \varphi 12$.

It should be understood that a difference between phase shifts of two network devices at the first moment may be determined based on a difference between phases of the two network devices at the first moment. For example, a phase shift difference between two network devices may be equal to a difference between phases of the two network devices at the first moment.

In a possible design solution, the RS is a CSI-RS.

Optionally, the first moment is an end position of a last RS set that is in the at least two RS sets and that is before the CSI-RS. Alternatively, the first moment is a time domain position corresponding to a channel state information (channel state information, CSI) reference resource. Alternatively, the first moment is a start moment at which the first information is reported. Alternatively, the first moment is a moment after a start moment at which the first information is reported, and a time length between the first moment and a moment at which the first information is reported is a first time length. It should be understood that the end position, the time domain position, the start moment, and the moment may correspondingly be a symbol, a mini-slot, a slot, a subframe, a frame, or the like in time domain. This is not limited in this application.

It should be understood that for each time of CSI reporting, a corresponding CSI-RS is determined by setting fixed time, and a CSI measurement result is reported based on a corresponding CSI-RS. For example, CSI reference resources are defined in new radio (new radio, NR) and indicate time-frequency resources in several slots before a slot for CSI reporting. A terminal device receives a reference signal before the CSI reference resource, and reports a CSI measurement result at a time domain position that is for CSI reporting and that is indicated by the network device. In this case, the terminal device needs to complete calculation of the CSI measurement result within an interval (namely, time for calculating the CSI measurement result) between a time domain position corresponding to the CSI reference resource and the time domain position for CSI reporting. The time domain position for CSI reporting includes a slot for reporting (sending) CSI by the terminal device to the network device. Alternatively, the time domain position for CSI reporting may further include a subframe for CSI reporting, a specific symbol in a slot in which the CSI is reported, and the like.

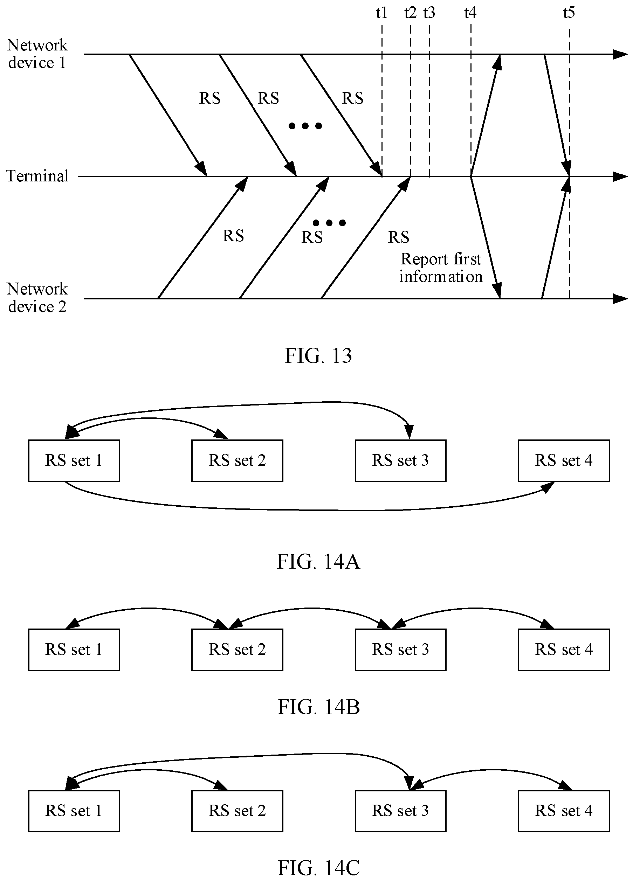

The following describes the first moment with reference to an example in which the at least two network devices include a network device 1 and a network device 2. As shown in FIG. 13, both the network device 1 and the network device 2 send a plurality of RSs to a terminal. An end moment at which the network device 1 sends the RS is a moment t1. An end moment at which the network device 2 sends the RS is a moment t2. A time domain position corresponding to a CSI reference resource is a moment t3. A start moment at which the terminal reports the first information is a moment t4. A moment at which the terminal receives downlink signals of the network device 1 and the network device 2 is a moment t5. If the first moment is an end position of a last RS set that is in the at least two RS sets and that is before a CSI-RS, the first moment is the moment t2 in FIG. 13. If the first moment is the time domain position corresponding to the CSI reference resource, the first moment is the moment t3. If the first moment is a start moment at which the first information is reported, the first moment is the moment t4. If the first moment is a moment after the start moment at which the first information is reported, and a time length between the first moment and the moment at which the first information is reported is a first time length, the first moment may be a moment the first time length after the moment t4.

The first time length may be less than or equal to a time length between t4 and t5, that is, t5-t4.

The following separately describes, with reference to Case 1 to Case 3, a corresponding phase variation between RS sets in the at least two RS sets.

Case 1: The corresponding phase variation between the RS sets in the at least two RS sets includes a corresponding phase variation between a first RS set and a second RS set. The second RS set is a preset RS set (which may also be referred to as a reference RS set) in the at least two RS sets, and the first RS set is any RS set in the at least two RS sets other than the second RS set. For example, the second RS set is used as a preset or reference RS set, and is predefined in a protocol, or is configured by the network device, or is obtained through negotiation between the network device and the terminal device. This is not limited in this application.

In other words, the corresponding phase variation between the RS sets in the at least two RS sets is a phase variation between a phase corresponding to another RS set in the at least two RS sets other than a reference RS set and a phase corresponding to a reference RS set, where one RS set in the at least two RS sets is used as the reference RS set.

The following uses an example with reference to the RS set shown in Table 1. As shown in FIG. 14A, the second RS set may be any one of an RS set 1 to an RS set 4, that is, the RS set 1 to RS set 4 may be preset as the second RS set, and the first RS set is any one of the RS set 1 to the RS set 4 other than the second RS set. Assuming that the second RS set is the RS set 1, the first RS set is any one of the RS set 2, the RS set 3, and the RS set 4. The corresponding phase variation between the RS sets in the at least two RS sets includes a phase variation between the RS set 2 and the RS set 1, a phase variation between the RS set 3 and the RS set 1, and a phase variation between the RS set 4 and the RS set 1.

Case 2: The corresponding phase variation between the RS sets in the at least two RS sets includes a corresponding phase variation between an $i^{th}$ RS set and a $(i + 1)^{th}$ RS set that are in the at least two RS sets. $i$ is an integer, and $1 \leq i < I$, that is, $i$ traverses 1 to $I - 1$. $I$ is a total quantity of reference signal sets in the at least two reference signal sets.

The following uses an example with reference to the RS set shown in Table 1. As shown in FIG. 14B, the corresponding phase variation between the RS sets in the at least two RS sets includes a corresponding phase variation between an RS set 2 and an RS set 1, a corresponding phase variation between an RS set 3 and the RS set 2, and a corresponding phase variation between an RS set 4 and the RS set 3.

Case 3: The corresponding phase variation between the RS sets in the at least two RS sets is merely used as an example. In an actual implementation, the corresponding phase variation between the RS sets in the at least two RS sets may include a phase variation between any two of the at least two RS sets that may be obtained. For example, as shown in FIG. 14C, the corresponding phase variation between the RS sets in the at least two RS sets may include a phase variation between an RS set 1 and an RS set 2, a phase variation between the RS set 1 and an RS set 3, and a phase variation between the RS set 3 and an RS set 4.

In other words, a corresponding phase variation between two reference signal sets may be calculated by using one preset reference signal set in the at least two reference signal sets as a reference. In this way, when a quantity of reference signal sets is greater than or equal to 3, complexity of the first information may be simplified, to reduce resource overheads.

In a possible design solution, the corresponding phase variation between the RS sets in the at least two RS sets is related to an index of a frequency domain unit.

In this way, the corresponding phase variation between the reference signal sets in the at least two reference signal sets may be separately obtained for different frequency domain units, to further improve phase compensation accuracy.

Optionally, the phase variation at the first moment and the index of the frequency domain unit satisfy a linear relationship. Therefore, reporting complexity of the phase variation at the first moment can be simplified, and feedback overheads can be reduced.

Further, the phase variation at the first moment and the index of the frequency domain unit satisfies the following relationship shown in a formula (28):

$$\text{P1} = 2\pi\rho + 2\pi k\sigma \qquad (28)$$

P1 is the phase variation at the first moment. $k$ is the index of the frequency domain unit. $k$ is a positive integer greater than or equal to 0. $\rho$ is a constant. $\sigma$ is a constant. It may be understood that $\rho$ may be a parameter (for example, a phase shift) related to a frequency offset caused by a carrier frequency offset and/or Doppler. $\sigma$ is a parameter (for example, a phase shift) related to a frequency offset caused by a sampling frequency offset and/or a multipath delay.

The first information may directly indicate a phase variation between two reference signal sets, for example, indicate P1 between the two reference signal sets. Alternatively, the first information may indirectly indicate a phase variation between two reference signal sets, for example, indicate $\rho$ and $\sigma$ between the two reference signal sets, or indicate $2\pi\rho$ and $2\pi k\sigma$ between the two reference signal sets.

The following uses an example to describe the corresponding phase variation between the RS sets in the at least two RS sets at the first moment with reference to Case 1.

It is assumed that the first moment is the moment t2, a frequency offset caused by a carrier frequency offset and/or a Doppler effect of the network device 1 at the moment t2 is $\varepsilon_1'$, a frequency offset caused by a sampling frequency offset and/or a multipath delay is $\mu_1'$, a phase corresponding to the network device 1 at the moment t2 is $f_{1,2}(k)$, a frequency offset caused by a carrier frequency offset and/or a Doppler effect of the network device 2 at the moment t1 is $\varepsilon_2'$, a frequency offset caused by a sampling frequency offset and/or a multipath delay is $\mu_2'$, and a phase corresponding to the network device 2 at the moment t1 is $f_{2,1}(k)$.

The phase corresponding to the network device 2 at the moment t2 satisfies a relationship shown in the following formula (29):

$$f_{2,2}(k) = f_{2,1}(k) + 2\pi\left(\varepsilon_2' + k\Delta_f\mu_2'\right)(t_2 - t_1) \qquad (29)$$

In this case, a phase variation between the phase corresponding to the network device 1 at the moment t2 and the phase corresponding to the network device 2 at the moment t2 satisfies a relationship shown in the following formula (30):

$$f_{1,2}(k) - (f_{2,1}(k) + 2\pi\left(\varepsilon_2' + k\Delta_f\mu_2'\right)(t_2 - t_1)) = -2\pi\varepsilon_2'(t_2 - t_1) + f_{1,2}(k) - (f_{2,1}(k) +$$
$$2\pi\left(k\Delta_f\mu_2'\right)(t_2 - t_1)) = 2\pi\rho + 2\pi k\sigma \qquad (30)$$

In this case, $\rho = -\varepsilon_2'(t_2 - t_1)$, and $\sigma = (f_{1,2}(k) - f_{2,1}(k) + 2\pi\left(k\Delta_f\mu_2'\right)(t_2 - t_1))/2\pi$.

Similarly, a phase variation between the network device 3 and the network device 1 and a phase variation between the network device 4 and the network device 1 at the first moment may be obtained.

It may be understood that, in Case 2, similarly, the phase variation between the network device 2 and the network device 1 at the first moment, the phase variation between the network device 3 and the network device 2, and the phase variation between the network device 4 and the network device 3 at the first moment may be obtained.

In Case 3, similarly, the phase variation between the network device 2 and the network device 1, the phase variation between the network device 3 and the network device 1, and the phase variation between the network device 4 and the network device 3 at the first moment may be obtained.

It should be understood that, in the foregoing formula (30) in this embodiment of this application, a manner of calculating the phase variation between the at least two network devices is merely used as an example. In an actual implementation, another manner is alternatively used for calculation. The network device 1 and the network device 2 are still used as examples. The phase variation between the phase corresponding to the network device 2 at the moment t2 and the phase corresponding to the network device 1 at the moment t2 may be calculated. A calculation principle is similar to that in the formula (30), and a difference lies in that the phase variation between the phase corresponding to the network device 2 at the moment t2 and the phase corresponding to the network device 1 at the moment t2 and the phase variation between the phase corresponding to the network device 1 at the moment t2 and the phase corresponding to the network device 2 at the moment t2 are is opposites.

In addition, the first moment may alternatively be the moment t1. A principle of calculating the phase variation between the network device 2 and the network device 1 when the first moment is the moment t1 is similar to that when the first moment is the moment t2, and details are not described herein again.

In this embodiment of this application, a phase corresponding to the network device is a phase of a signal sent by the network device. Details are not described herein.

A phase variation corresponding to two reference signals is a corresponding phase variation between network devices respectively corresponding to the two reference signals.

That the terminal sends the first information based on the at least two RS sets may also mean that the terminal sends the first information based on an RS set corresponding to each of the at least two network devices.

S703: The network device in the at least two network devices performs phase compensation based on the first information.

In a possible design solution, S703 may include: The network device in the at least two network devices performs phase compensation based on the phase variation between the reference signal sets in the at least two reference signal sets indicated by the first information.

In some optional design solutions, some of the at least two network devices may perform phase compensation based on the phase variation between the reference signal sets in the at least two reference signal sets indicated by the first information. Alternatively, in some optional design solutions, all of the at least two network devices may perform phase compensation based on the phase variation between the reference signal sets in the at least two reference signal sets indicated by the first information.

It should be understood that the terminal may further feed back, to the at least two network devices, third information indicating a phase shift difference between two of the at least two network devices.

The third information may include $\Delta\varepsilon$ and $\Delta\mu$ between two of the at least two network devices. For an implementation principle of the third information, refer to related descriptions of information indicating $\Delta\varepsilon$ and $\Delta\mu$ in FIG. 3. Details are not described herein.

With reference to the foregoing Case 1 to Case 3, the following separately describes, by using examples, how to perform phase compensation.

In Case 1, a network device corresponding to a reference RS set, for example, the RS set 1 may not perform phase compensation, and in the at least two network devices, a network device other than the reference RS set performs phase compensation based on the first information.

With reference to Table 1 and FIG. 14A as an example, assuming that an RS set 1 corresponds to the network device 1, and the reference RS set is the RS set 1, phase compensation may be performed by the network device 2 and the network device 3, and the network device 1 does not perform phase compensation. The following further describes phase compensation with reference to the network device 2.

A phase difference between the network device 1 and the network device 2 at the first moment is used as an example. Assuming that a moment at which the network device 1 and the network device 2 send downlink signals is the moment t4, a phase compensated for by the network device 2 may satisfy a relationship shown in the following formula (31):

$$\Delta\varphi2 = 2\pi\rho + 2\pi k\sigma + 2\pi\left(\Delta\varepsilon + k\Delta_f\Delta\mu\right)(t_4 - t_2) \qquad (31)$$

$\Delta\varphi2$ is the phase compensated for by the network device 2.

It is assumed that at a moment t0, a signal received by the terminal satisfies the relationship shown in the formula (18). In this case, at the moment t4, the network device 1 or the network device 2 may perform compensation on a precoding vector at a corresponding moment. An example in which the network device 2 may perform compensation on the precoding vector at a corresponding moment is used. In this case, a signal received by the terminal at the moment t4 satisfies a relationship shown in the following formula (32):

$$\boldsymbol{y}_1(t + \Delta t) = (\boldsymbol{H}^1 \boldsymbol{W}_{11} + e^{j\Delta\varphi 2} e^{j\Delta\varphi} \boldsymbol{H}^2 \boldsymbol{W}_{21}) \boldsymbol{S}_1 + (\boldsymbol{H}^1 \boldsymbol{W}_{12} + e^{j\Delta\varphi 2} e^{j\Delta\varphi} \boldsymbol{H}^2 \boldsymbol{W}_{22}) \boldsymbol{S}_2 \ (32)$$

It may be understood that, for phase compensation according to the formula (32), the phase compensation may alternatively be performed by the network device 1. In this case, the phase compensated for by the network device 1 is -$\Delta\varphi$2. If the network device 1 performs compensation on the precoding vector, a signal received by the terminal at the moment t4 satisfies a relationship shown in the following formula (33):

$$\boldsymbol{y}_1(t + \Delta t) = (e^{-j\Delta\varphi 2} \boldsymbol{H}^1 \boldsymbol{W}_{11} + e^{j\Delta\varphi} \boldsymbol{H}^2 \boldsymbol{W}_{21}) \boldsymbol{S}_1 + (e^{-j\Delta\varphi 2} \boldsymbol{H}^1 \boldsymbol{W}_{12} + e^{j\Delta\varphi} \boldsymbol{H}^2 \boldsymbol{W}_{22}) \boldsymbol{S}_2 \quad (33)$$

In addition, the phase variation between the at least two network devices calculated in S702 is the phase variation between the phase corresponding to the network device 2 at the moment t2 and the phase corresponding to the network device 1 at the moment t2. In this case, a phase difference $\Delta\varphi$2 between the phase corresponding to the network device 2 and the phase corresponding to the network device 1 may still be obtained. In this case, phase compensation may still be performed according to the formula (32) or the formula (33).

It should be understood that a smaller value of $\Delta\varphi$2 + $\Delta\varphi$ indicates higher phase compensation accuracy. For example, when $\Delta\varphi$2 + $\Delta\varphi$ = 0, complete coherence of received signals may be implemented, that is, most accurate phase compensation is implemented. A principle of performing phase compensation by the network device 3 and the network device 4 is similar to that of performing phase compensation by the network device 2, and details are not described herein again.

The foregoing phase compensation manner for Case 1 is merely used as an example. In an actual implementation, the network device 2 may not perform phase compensation, and the network device 1, the network device 3, and the network device 4 may perform phase compensation.

In Case 2, an RS set corresponding to one of the at least two network devices may be used as a reference RS set, and each network device other than the network device corresponding to the reference RS set may calculate, based on the first information, a corresponding phase shift between an RS set corresponding to the network device and the reference RS set. For example, with reference to Table 1 and FIG. 14B, the RS set 2 is the reference RS set, and the network device 1 may obtain the phase variation between the RS set 1 and the RS set 2, to perform phase compensation. For a phase compensation principle, refer to the formula (32). Details are not described herein again. Similarly, the network device 3 and the network device 4 may perform phase compensation.

It should be understood that, when the first information indirectly indicates the phase variation between the two reference signal sets, before performing S703, the network device may first determine the phase variation between the reference signal sets in the at least two reference signal sets based on the first information. For example, if the first information indirectly indicates $\rho$ and $\sigma$ between two reference signal sets, the network device may determine the phase variation between the reference signal sets in the at least two reference signal sets according to the formula (28).

It may be understood that, in this embodiment of this application, the method provided in FIG. 7 may further include: At least one of the at least two network devices sends second information to the terminal. Correspondingly, the terminal receives the second information sent by the at least one of the at least two network devices.

The second information is indication information indicating a reference resource set carrying the at least two reference signal sets.

In some possible design solutions, the network device that sends the second information may be a primary network device, for example, a primary base station.

In some possible design solutions, the network device that sends the second information may be a secondary network device, for example, a secondary base station.

In some possible design solutions, the second information may be jointly sent by the at least two network devices. For example, different network devices in the at least two network devices may send a part of the second information. Complete second information may be obtained from information sent by all of the at least two network devices.

Based on the method provided in FIG. 7, the terminal may perform phase measurement based on the at least two reference signal sets, and send the corresponding phase variation between the reference signal sets in the at least two reference signal sets at the first moment, that is, a phase variation between a plurality of network devices that provide services for the terminal in a coordination scenario. At different moments, phase variations between the plurality of network devices that provide the services for the terminal may be different. The network device may perform phase compensation on a downlink signal based on the corresponding phase variation that is between the reference signal sets in the at least two reference signal sets at the first moment and that is reported by the terminal, to improve phase compensation accuracy, and improve a CJT transmission effect.

For ease of understanding beneficial effects of embodiments of this application, the following describes beneficial effects of embodiments of this application by using examples with reference to the network device 1 and the network device 2.

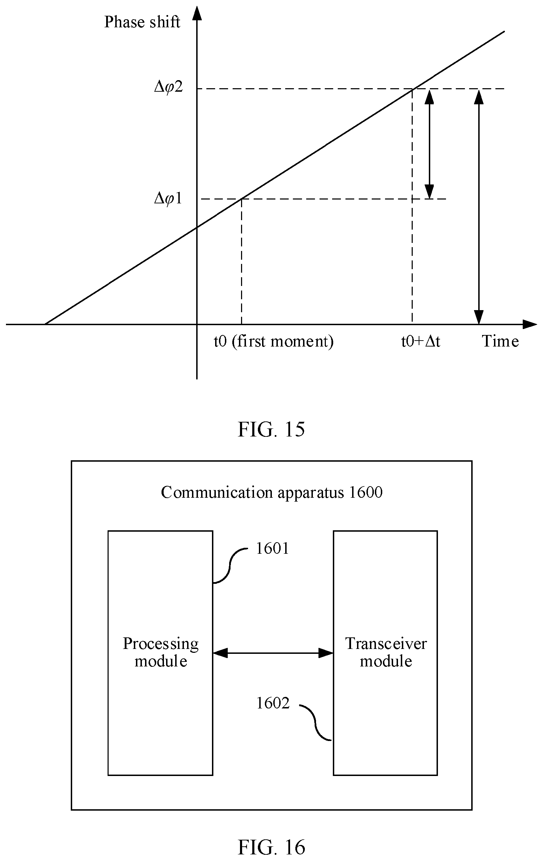

FIG. 15 is a diagram of a phase that is compensated for by the network device 2. As shown in FIG. 15, when phase compensation is performed by using the phase shift calculated in the formula (17), a phase that is compensated for is a phase shift of the network device 1 relative to the network device 2 between the moment $t0 + \Delta t$ and the moment $t_0$, that is, $\Delta \varphi 1$. However, in the solution in this embodiment of this application, assuming that the first moment is the moment t0, the phase that is compensated for includes a phase shift of the network device 1 relative to the network device 2 between the first moment and the moment at which the downlink signal is sent, and a phase shift of the network device 1 relative to the network device 2 between the first moment and a moment at which no phase shift exists between the network device 1 and the network device 2, that is, $\Delta \varphi 2$. It can be learned that, according to the method provided in this embodiment of this application, more phase compensation can be performed, to improve phase compensation accuracy.

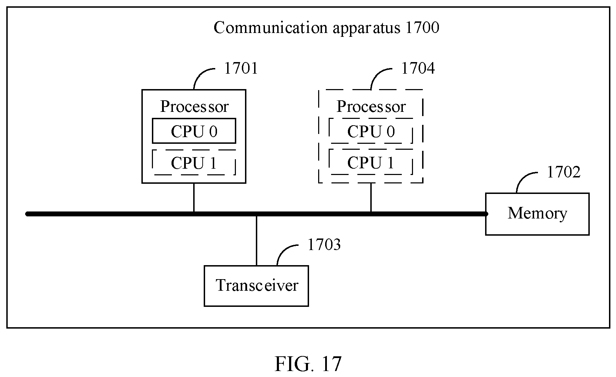

The foregoing describes, in detail with reference to FIG. 7 to FIG. 15, the phase compensation method provided in embodiments of this application. A communication apparatus configured to perform the phase compensation method provided in embodiments of this application is described below in detail with reference to FIG. 16 and FIG. 17.

For example, FIG. 16 is a diagram 1 of a structure of a communication apparatus according to an embodiment of this application. As shown in FIG. 16, the communication apparatus 1600 includes a processing module 1601 and a transceiver module 1602. For ease of description, FIG. 16 shows only main components of the communication apparatus 1600.

In some embodiments, the communication apparatus 1600 may be used in the communication system shown in FIG. 5, and perform a function of the terminal in the phase compensation method shown in FIG. 7.

The transceiver module 1602 is configured to receive at least two RS sets. Each of the at least two RS sets includes at least one RS.

The processing module 1601 is configured to generate first information. The first information indicates a corresponding phase variation between RS sets in the at least two RS sets at a first moment.

The transceiver module 1602 is further configured to send the first information based on the at least two RS sets.

In a possible design solution, the corresponding phase variation between the RS sets in the at least two RS sets includes a corresponding phase variation between a first RS set and a second RS set. The second RS set is a preset RS set in the at least two RS sets, and the first RS set is any RS set in the at least two RS sets other than the second RS set.

In a possible design solution, the corresponding phase variation between the RS sets in the at least two RS sets includes a corresponding phase variation between an $i^{th}$ RS set and an $(i + 1)^{th}$ RS set that are in the at least two RS sets. $i$ is an integer, and $1 \leq i < l$. $l$ is a total quantity of reference signal sets in the at least two reference signal sets.

In a possible design solution, the corresponding phase variation between the RS sets in the at least two RS sets is related to an index of a frequency domain unit.

Optionally, the phase variation at the first moment and the index of the frequency domain unit satisfy a linear relationship.

Further, the phase variation at the first moment and the index of the frequency domain unit satisfy the following relationship: $P1 = 2\pi \rho + 2\pi k\sigma$. P1 is the phase variation at the first moment. $k$ is the index of the frequency domain unit. $k$ is a positive integer greater than or equal to 0. $\rho$ is a constant. $\sigma$ is a constant.

In a possible design solution, the RS is a channel state information CSI-RS.

Optionally, the first moment is an end position of a last RS set that is in the at least two RS sets and that is before a CSI reference resource. Alternatively, the first moment is a time domain position corresponding to a CSI reference resource. Alternatively, the first moment is a start moment at which the first information is reported. Alternatively, the first moment is a moment after a start moment at which the first information is reported, and a time length between the first moment and a moment at which the first information is reported is a first time length.

In a possible design solution, an RS in each of the at least two RS sets is carried on an RS resource in a same RS resource set. The RS resource set includes a plurality of RS resources.

Optionally, in the plurality of RS resources in the RS resource set, a same port index corresponds to a same port; and/or, the plurality of RS resources in the RS resource set are quasi colocated.

In a possible design solution, RSs in different RS sets in the at least two RS sets are respectively carried on RS resources in different RS resource sets. The RS resource set includes one RS resource.

In a possible design solution, an RS in each of the at least two RS sets is carried on RS resources in a plurality of RS resource sets.

Optionally, in each of the plurality of RS resource sets, there is at least one RS resource having a same resource identifier.

Alternatively, optionally, RS resources in the plurality of RS resource sets are arranged in an order of resource identifiers, and same port indexes of RS resources that are in different RS resource sets and that have a same arrangement ranking correspond to a same port; and/or RS resources that are in different RS resource sets and that have a same arrangement ranking are quasi colocated.

In a possible design solution, an RS in each of the at least two RS sets is carried on an RS resource in a same RS resource set. The RS resource set includes a plurality of RS resources, and RSs in different RS sets are carried on different RS resources.

Optionally, the transceiver module 1602 may include a receiving module and a sending module (not shown in FIG. 16). The transceiver module 1602 is configured to implement a sending function and a receiving function of the communication apparatus 1600.

Optionally, the communication apparatus 1600 may further include a storage module (not shown in FIG. 16), and the storage module stores a program or instructions. When the processing module 1601 executes the program or the instructions, the communication apparatus 1600 is caused to perform the function of the terminal in the phase compensation method shown in any one of FIG. 7.

It should be understood that the processing module 1601 in the communication apparatus 1600 may be implemented by a processor or a processor-related circuit component, and may be a processor or a processing unit; and the transceiver module 1602 may be implemented by a transceiver or a transceiver-related circuit component, and may be a transceiver or a transceiver unit.

It should be noted that the communication apparatus 1600 may be a terminal, may be a chip (system) or another part or component that may be disposed in the terminal, or may be an apparatus including the terminal. This is not limited in this application.

In addition, for technical effects of the communication apparatus 1600, refer to technical effects of the phase compensation method shown in any one of FIG. 7. Details are not described herein again.

In some other embodiments, the communication apparatus 1600 may be used in the communication system shown in FIG. 5, and perform a function of the network device in the phase compensation method shown in FIG. 7.

The processing module 1601 is configured to generate RS sets. The RS set includes at least one RS.

The transceiver module 1602 is configured to send the RS set to the terminal.

The transceiver module 1602 is further configured to receive first information that is sent by the terminal based on at least two RS sets. The first information indicates a corresponding phase variation between RS sets in the at least two RS sets at a first moment.

In a possible design solution, the phase variation between the RS sets in the at least two RS sets includes a corresponding phase variation between a first RS set and a second RS set. The second RS set is a preset RS set in the at least two RS sets, and the first RS set is any RS set in the at least two RS sets other than the second RS set.

In a possible design solution, the corresponding phase variation between the RS sets in the at least two RS sets includes a corresponding phase variation between an $i^{th}$ RS set and an $(i+1)^{th}$ RS set that are in the at least two RS sets. $i$ is an integer, and $1 \leq i < I$. $I$ is a total quantity of RS sets in the at least two RS sets.

In a possible design solution, the corresponding phase variation between the RS sets in the at least two RS sets is related to an index of a frequency domain unit.

Optionally, the phase variation at the first moment and the index of the frequency domain unit satisfy a linear relationship.

Further, the phase variation at the first moment and the index of the frequency domain unit satisfy the following relationship: $P1=2\pi\rho+2\pi k\sigma$. P1 is the phase variation at the first moment. $k$ is the index of the frequency domain unit. $k$ is a positive integer greater than or equal to 0. $\rho$ is a constant. $\sigma$ is a constant.

In a possible design solution, the RS is a CSI-RS.

In a possible design solution, the first moment is an end position of a last RS set that is in the at least two RS sets and that is before a CSI reference resource. Alternatively, the first moment is a time domain position corresponding to a CSI reference resource. Alternatively, the first moment is a start moment at which the first information is reported. Alternatively, the first moment is a moment after a start moment at which the first information is reported, and a time length between the first moment and a moment at which the first information is reported is a first time length.

In a possible design solution, an RS in each of the at least two RS sets is carried on an RS resource of a same RS resource set. The RS resource set includes a plurality of RS resources.

Optionally, in the plurality of RS resources in the RS resource set, a same port index corresponds to a same port; or the plurality of RS resources in the RS resource set are quasi colocated.

In a possible design solution, RSs in different RS sets in the at least two RS sets are respectively carried on RS resources in different RS resource sets. The RS resource set includes one RS resource.

In a possible design solution, an RS in each of the at least two RS sets is carried on RS resources in a plurality of RS resource sets.

Optionally, in each RS resource in the plurality of RS resource sets, there is at least one RS resource having a same resource identifier.

Alternatively, optionally, RS resources in the plurality of RS resource sets are arranged in an order of resource identifiers, and same port indexes of RS resources that are in different RS resource sets and that have a same arrangement ranking correspond to a same port; and/or RS resources that are in different RS resource sets and that have a same arrangement ranking are quasi colocated.

In a possible design solution, an RS in each of the at least two RS sets is carried on an RS resource in a same RS resource set. The RS resource set includes a plurality of RS resources, and RSs in different RS sets are carried on different RS resources.

In a possible design solution, the processing module 1601 is further configured to perform phase compensation based on the first information.

Optionally, the transceiver module 1602 may include a receiving module and a sending module (not shown in FIG. 16). The transceiver module 1602 is configured to implement a sending function and a receiving function of the communication apparatus 1600.

Optionally, the communication apparatus 1600 may further include a storage module (not shown in FIG. 16), and the storage module stores a program or instructions. When the processing module 1601 executes the program or the instructions, the communication apparatus 1600 is caused to perform the function of the network device in the phase compensation method shown in any one of FIG. 7.

It should be understood that the processing module 1601 in the communication apparatus 1600 may be implemented by a processor or a processor-related circuit component, and may be a processor or a processing unit; and the transceiver module 1602 may be implemented by a transceiver or a transceiver-related circuit component, and may be a transceiver or a transceiver unit.

It should be noted that the communication apparatus 1600 may be a network device, may be a chip (system) or another part or component that may be disposed in the network device, or may be an apparatus including the network device. This is not limited in this application.

In addition, for technical effects of the communication apparatus 1600, refer to technical effects of the phase compensation method shown in any one of FIG. 7. Details are not described herein again.

For example, FIG. 17 is a diagram 2 of a structure of a communication apparatus according to an embodiment of this application. The communication apparatus may be a terminal or a network device, or may be a chip (system) or another part or component that may be disposed in a terminal or a network device. As shown in FIG. 17, the communication apparatus 1700 may include a processor 1701. Optionally, the communication apparatus 1700 may further include a memory 1702 and/or a transceiver 1703. The processor 1701 is coupled to the memory 1702 and the transceiver 1703, for example, may be connected through a communication bus.

The following specifically describes each component of the communication apparatus 1700 with reference to FIG. 17.

The processor 1701 is a control center of the communication apparatus 1700, and may be one processor, or may be a collective name of a plurality of processing elements. For example, the processor 1701 is one or more central processing units (central processing units, CPUs), and may be an application-specific integrated circuit (application-specific integrated circuit, ASIC) or one or more integrated circuits configured to implement embodiments of this application, for example, one or more digital signal processors (digital signal processors, DSPs) or one or more field programmable gate arrays (field programmable gate arrays, FPGAs).

Optionally, the processor 1701 may perform various functions of the communication apparatus 1700 by running or executing a software program stored in the memory 1702 and invoking data stored in the memory 1702.

During specific implementation, in an embodiment, the processor 1701 may include one or more CPUs, such as a CPU 0 and a CPU 1 shown in FIG. 17.

During specific implementation, in an embodiment, the communication apparatus 1700 may alternatively include a plurality of processors such as the processor 1701 and a processor 1704 shown in FIG. 17. Each of the processors may be a single-core processor (single-CPU), or may be a multi-core processor (multi-CPU). The processor herein may be one or more devices, circuits, and/or processing cores configured to process data (for example, computer program instructions).

The memory 1702 is configured to store a software program for executing the solutions of this application, and the processor 1701 controls the execution. For a specific implementation, refer to the foregoing method embodiments. Details are not described herein again.

Optionally, the memory 1702 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instruction or data structure and that can be accessed by a computer. However, this is not limited thereto. The memory 1702 may be integrated with the processor 1701; or may exist independently, and is coupled to the processor 1701 through an interface circuit (not shown in FIG. 17) of the communication apparatus 1700. This is not specifically limited in embodiments of this application.

The transceiver 1703 is configured to communicate with another communication apparatus. For example, the communication apparatus 1700 is the terminal, and the transceiver 1703 may be configured to communicate with the network device or another terminal. For another example, the communication apparatus 1700 is a network device, and the transceiver 1703 may be configured to communicate with the terminal or another network device.

Optionally, the transceiver 1703 may include a receiver and a transmitter (not separately shown in FIG. 17). The receiver is configured to implement a receiving function, and the transmitter is configured to implement a sending function.

Optionally, the transceiver 1703 may be integrated with the processor 1701; or may exist independently, and is coupled to the processor 1701 through an interface circuit (not shown in FIG. 17) of the communication apparatus 1700. This is not specifically limited in embodiments of this application.

It should be noted that the structure of the communication apparatus 1700 shown in FIG. 17 does not constitute a limitation on the communication apparatus. An actual communication apparatus may include more or fewer components than those shown in the figure, or combine some components, or use a different component deployment.

In addition, for technical effects of the communication apparatus 1700, refer to the technical effects of the phase compensation method in the foregoing method embodiments. Details are not described herein again.

It should be understood that, in embodiments of this application, the processor may be a CPU, or may be another general-purpose processor, a DSP, an ASIC, an FPGA or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a ROM, a programmable read-only memory (programmable ROM, PROM), an erasable programmable read-only memory (erasable PROM, EPROM), an EEPROM, or a flash memory. The volatile memory may be a RAM and is used as an external cache. By way of example but not limitative description, a plurality of forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

All or some of the foregoing embodiments may be implemented using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded or executed on a computer, the procedures or functions according to embodiments of this application are entirely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects, and indicates that three relationships may exist. For example, A and/or B may represent the following three cases: Only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including a singular item (piece) or any combination of plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes outside the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or some of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A phase compensation method, applied to a first communication apparatus, wherein the method comprises:

    receiving at least two reference signal sets, wherein each of the at least two reference signal sets comprises at least one reference signal; and
    sending first information based on the at least two reference signal sets, wherein the first information indicates a corresponding phase variation between reference signal sets in the at least two reference signal sets at a first moment.

2.  The method according to claim 1, wherein the corresponding phase variation between the reference signal sets in the at least two reference signal sets comprises a corresponding phase variation between a first reference signal set and a second reference signal set, the second reference signal set is a preset reference signal set in the at least two reference signal sets, and the first reference signal set is any reference signal set in the at least two reference signal sets other than the second reference signal set.

3.  The method according to claim 1, wherein the corresponding phase variation between the reference signal sets in the at least two reference signal sets comprises a corresponding phase variation between an $i^{th}$ reference signal set and an $(i+1)^{th}$ reference signal set that are in the at least two reference signal sets; i is an integer, and $1 \leq i < l$; and $l$ is a total quantity of reference signal sets in the at least two reference signal sets.

4.  The method according to any one of claims 1 to 3, wherein the corresponding phase variation between the reference signal sets in the at least two reference signal sets is related to an index of a frequency domain unit.

5. The method according to claim 4, wherein the phase variation at the first moment and the index of the frequency domain unit satisfy a linear relationship.

6. The method according to claim 5, wherein the phase variation at the first moment and the index of the frequency domain unit satisfy the following relationship:

$$P1 = 2\pi\rho + 2\pi k\sigma,$$

wherein
P1 is the phase variation at the first moment, $k$ is the index of the frequency domain unit, $k$ is a positive integer greater than or equal to 0, $\rho$ is a constant, and $\sigma$ is a constant.

7. The method according to any one of claims 1 to 6, wherein the reference signal is a channel state information-reference signal CSI-RS.

8. The method according to claim 7, wherein the first moment is an end position of a last reference signal set that is in the at least two reference signal sets and that is before a channel state information CSI reference resource; or

the first moment is a time domain position corresponding to the CSI reference resource; or
the first moment is a start moment at which the first information is reported; or
the first moment is a moment after a start moment at which the first information is reported, and a time length between the first moment and a moment at which the first information is reported is a first time length.

9. The method according to any one of claims 1 to 8, wherein a reference signal in each of the at least two reference signal sets is carried on a reference signal resource in a same reference signal resource set, and the reference signal resource set comprises a plurality of reference signal resources.

10. The method according to claim 9, wherein in the plurality of reference signal resources in the reference signal resource set, a same port index corresponds to a same port; and/or the plurality of reference signal resources in the reference signal resource set are quasi colocated.

11. The method according to any one of claims 1 to 8, wherein reference signals in different reference signal sets in the at least two reference signal sets are respectively carried on reference signal resources in different reference signal resource sets, and the reference signal resource set comprises one reference signal resource.

12. The method according to any one of claims 1 to 8, wherein a reference signal in each of the at least two reference signal sets is carried on reference signal resources in a plurality of reference signal resource sets.

13. The method according to claim 12, wherein each of the plurality of reference signal resource sets comprises at least one reference signal resource having a same resource identifier.

14. The method according to claim 12, wherein reference signal resources in the plurality of reference signal resource sets are arranged in an order of resource identifiers, and same port indexes of reference signal resources that are in different reference signal resource sets and that have a same arrangement ranking correspond to a same port; and/or reference signal resources that are in different reference signal resource sets and that have a same arrangement ranking are quasi colocated.

15. The method according to any one of claims 1 to 8, wherein reference signals in all of the at least two reference signal sets are carried on reference signal resources in a same reference signal resource set, the reference signal resource set comprises a plurality of reference signal resources, and reference signals in different reference signal sets are carried on different reference signal resources.

16. A phase compensation method, applied to a second communication apparatus, wherein the method comprises:

sending a first reference signal set to a terminal, wherein the first reference signal set comprises at least one reference signal; and

receiving first information that is sent by the terminal based on at least two reference signal sets, wherein the at least two reference signal sets comprise the first reference signal set, and the first information indicates a corresponding phase variation between reference signal sets in the at least two reference signal sets at a first moment.

17. The method according to claim 16, wherein the phase variation between the reference signal sets in the at least two reference signal sets comprises a corresponding phase variation between the first reference signal set and a second reference signal set, the second reference signal set is a preset reference signal set in the at least two reference signal sets, and the first reference signal set is any reference signal set in the at least two reference signal sets other than the second reference signal set.

18. The method according to claim 16, wherein the corresponding phase variation between the reference signal sets in the at least two reference signal sets comprises a corresponding phase variation between an $i^{th}$ reference signal set and an $(i+1)^{th}$ reference signal set that are in the at least two reference signal sets; $i$ is an integer, and $1 \leq i < I$; and $I$ is a total quantity of reference signal sets in the at least two reference signal sets.

19. The method according to any one of claims 16 to 18, wherein the corresponding phase variation between the reference signal sets in the at least two reference signal sets is related to an index of a frequency domain unit.

20. The method according to claim 19, wherein the phase variation at the first moment and the index of the frequency domain unit satisfy a linear relationship.

21. The method according to claim 20, wherein the phase variation at the first moment and the index of the frequency domain unit satisfy the following relationship:

$$P1 = 2\pi\rho + 2\pi k\sigma,$$

wherein
P1 is the phase variation at the first moment, $k$ is the index of the frequency domain unit, $k$ is a positive integer greater than or equal to 0, $\rho$ is a constant, and $\sigma$ is a constant.

22. The method according to any one of claims 16 to 21, wherein the reference signal is a channel state information-reference signal CSI-RS.

23. The method according to any one of claims 16 to 22, wherein the first moment is an end position of a last reference signal set that is in the at least two reference signal sets and that is before a channel state information CSI reference resource; or

the first moment is a time domain position corresponding to the CSI reference resource; or
the first moment is a start moment at which the first information is reported; or
the first moment is a moment after a start moment at which the first information is reported, and a time length between the first moment and a moment at which the first information is reported is a first time length.

24. The method according to any one of claims 16 to 23, wherein a reference signal in each of the at least two reference signal sets is carried on a reference signal resource in a same reference signal resource set, and the reference signal resource set comprises a plurality of reference signal resources.

25. The method according to claim 24, wherein in the plurality of reference signal resources in the reference signal resource set, a same port index corresponds to a same port; or the plurality of reference signal resources in the reference signal resource set are quasi colocated.

26. The method according to any one of claims 16 to 23, wherein reference signals in different reference signal sets in the at least two reference signal sets are respectively carried on reference signal resources in different reference signal resource sets, and the reference signal resource set comprises one reference signal resource.

27. The method according to any one of claims 16 to 23, wherein a reference signal in each of the at least two reference signal sets is carried on reference signal resources in a plurality of reference signal resource sets.

28. The method according to claim 27, wherein each reference signal resource in the plurality of reference signal resource sets comprises at least one reference signal resource having a same resource identifier.

29. The method according to claim 27, wherein reference signal resources in the plurality of reference signal resource sets are arranged in an order of resource identifiers, and same port indexes of reference signal resources that are in different reference signal resource sets and that have a same arrangement ranking correspond to a same port; and/or reference signal resources that are in different reference signal resource sets and that have a same arrangement ranking are quasi colocated.

30. The method according to any one of claims 16 to 23, wherein reference signals in all of the at least two reference signal sets are carried on reference signal resources in a same reference signal resource set, the reference signal resource set comprises a plurality of reference signal resources, and reference signals in different reference signal sets are carried on different reference signal resources.

31. The method according to any one of claims 16 to 30, wherein the method further comprises:
performing phase compensation based on the first information.

32. A communication apparatus, wherein the communication apparatus is configured to perform the phase compensation method according to any one of claims 1 to 15, or the communication apparatus is configured to perform the phase compensation method according to any one of claims 16 to 31.

33. A communication apparatus, comprising a processor and a memory, wherein the memory is configured to store computer instructions, and when the processor executes the instructions, the communication apparatus is caused to perform the phase compensation method according to any one of claims 1 to 15, or perform the phase compensation method according to any one of claims 16 to 31.

34. A communication apparatus, comprising a processor and an interface circuit, wherein

the interface circuit is configured to receive code instructions, and transmit the code instructions to the processor; and
the processor is configured to run the code instructions to perform the phase compensation method according to any one of claims 1 to 15, or perform the phase compensation method according to any one of claims 16 to 31.

35. A communication apparatus, wherein the communication apparatus comprises a processor and a transceiver, the transceiver is used by the communication apparatus to exchange information with another communication apparatus, and the processor executes program instructions, to perform the phase compensation method according to any one of claims 1 to 15, or perform the phase compensation method according to any one of claims 16 to 31.

36. The communication apparatus according to any one of claims 32 to 35, wherein the communication apparatus is a chip.

37. A computer-readable storage medium, wherein the computer-readable storage medium comprises a computer program or instructions, and when the computer program or the instructions are run on a computer, the computer is caused to perform the phase compensation method according to any one of claims 1 to 15, or perform the phase compensation method according to any one of claims 16 to 31.

38. A computer program product, wherein the computer program product comprises a computer program or instructions, and when the computer program or the instructions are run on a computer, the computer is caused to perform the phase compensation method according to any one of claims 1 to 15, or perform the phase compensation method according to any one of claims 16 to 31.

Backhaul BH link

| Baseband board | | Baseband board |
| Main control board | | Main control board |

101a

101b

102

FIG. 1

FIG. 2

Network
device 1

RS

Report information
indicating $\Delta\varepsilon$ and $\Delta\mu$

• • •

Terminal

$\Delta\varepsilon$ and $\Delta\mu$

• • •

RS

Network
device 2

FIG. 3

EP 4 783 525 A1

Frequency
domain

$H^1_{0,0}$  $H^1_{1,0}$

$H^1_{0,1}$  $H^1_{1,1}$

$H^1_{0,2}$  $H^1_{1,2}$

$\vdots$  $\vdots$

$H^1_{0,K-3}$  $H^1_{1,K-3}$

$\Delta f$

$H^1_{0,K-2}$  $H^1_{1,K-2}$

$H^1_{0,K-1}$  $H^1_{1,K-1}$

$\Delta t$

Time domain

FIG. 4A

Frequency
domain

$H^2_{0,0}$  $H^2_{1,0}$

$H^2_{0,1}$  $H^2_{1,1}$

$H^2_{0,2}$  $H^2_{1,2}$

$\vdots$  $\vdots$

$H^2_{0,K-3}$  $H^2_{1,K-3}$

$\Delta f$

$H^2_{0,K-2}$  $H^2_{1,K-2}$

$H^2_{0,K-1}$  $H^2_{1,K-1}$

$\Delta t$

Time domain

FIG. 4B

501a

501b

Area 1

Area 2

502c

502d

502a 502b

502e

——————▶ Non-coordinated transmission

----------▶ Coordinated transmission

FIG. 5

Network device

Terminal device

RRC

RRC signaling

RRC

MAC

MAC CE signaling

MAC

Uplink control signaling,
downlink control signaling,
uplink data, or downlink data

PHY

PHY

FIG. 6

```
Network          ...      Network                      Terminal
device 1                  device 2                     device

    │                        │                             │
    │                        │   S701: Reference signal set │
    │────────────────────────┼────────────────────────────>│
    │                        │                             │
    │                        │   S701: Reference signal set │
    │                        │────────────────────────────>│
    │                        │                             │
    │                        │ S702: Send first information based
    │                        │ on at least two reference signal sets
    │<───────────────────────┼─────────────────────────────│
    │                        │                             │
┌───┴────────────────────────┴───┐                         │
│ S703: A network device in at least two network           │
│ devices performs phase compensation based on             │
│         the first information                            │
└───┬────────────────────────┬───┘                         │
    │                        │                             │
```

FIG. 7

FIG. 8

Periodicity 1           Periodicity 2           Periodicity 3

| RS resource 1 | RS resource 2 | RS resource 3 | RS resource 4 | RS resource 1 | RS resource 2 | RS resource 3 | RS resource 4 | RS resource 1 | RS resource 2 | RS resource 3 | RS resource 4 |

RS set 1   RS set 2   RS set 3   RS set 4   RS set 1   RS set 2   RS set 3   RS set 4   RS set 1   RS set 2   RS set 3   RS set 4

RS resource set 1   RS resource set 2   RS resource set 3   RS resource set 4   RS resource set 1   RS resource set 2   RS resource set 3   RS resource set 4   RS resource set 1   RS resource set 2   RS resource set 3   RS resource set 4

FIG. 9

EP 4 783 525 A1

| RS resource set 1 | | | | | RS resource set 2 | | | | | RS resource set 3 | | | |
|---|---|---|---|---|---|---|---|---|---|---|---|---|---|
| RS resource 1 | RS resource 2 | RS resource 3 | RS resource 4 | | RS resource 1 | RS resource 2 | RS resource 3 | RS resource 4 | | RS resource 1 | RS resource 2 | RS resource 3 | RS resource 4 |

RS set    RS set 2    RS set 3    RS set 4        RS set    RS set 2    RS set 3    RS set 4        RS set    RS set 2    RS set 3    RS set 4

FIG. 10

EP 4 783 525 A1

| RS resource set 1 | | | | | RS resource set 2 | | | | | RS resource set 3 | | | |
|---|---|---|---|---|---|---|---|---|---|---|---|---|---|
| RS resource 1 | RS resource 2 | RS resource 3 | RS resource 4 | | RS resource 5 | RS resource 6 | RS resource 7 | RS resource 8 | | RS resource 9 | RS resource 10 | RS resource 11 | RS resource 12 |
| ↓ | ↓ | ↓ | ↓ | | ↓ | ↓ | ↓ | ↓ | | ↓ | ↓ | ↓ | ↓ |
| RS set 1 | RS set 2 | RS set 3 | RS set 4 | | RS set 1 | RS set 2 | RS set 3 | RS set 4 | | RS set 1 | RS set 2 | RS set 3 | RS set 4 |

FIG. 11

Periodicity 1

Periodicity 2

Periodicity 3

| RS resource 1 | RS resource 2 | RS resource 3 | RS resource 4 |
|---|---|---|---|

| RS resource 1 | RS resource 2 | RS resource 3 | RS resource 4 |
|---|---|---|---|

| RS resource 1 | RS resource 2 | RS resource 3 | RS resource 4 |
|---|---|---|---|

TRP 1    TRP 2    TRP 3    TRP 4          TRP 1    TRP 2    TRP 3    TRP 4          TRP 1    TRP 2    TRP 3    TRP 4

FIG. 12

FIG. 13

FIG. 14A

FIG. 14B

FIG. 14C

FIG. 15

FIG. 16

Communication apparatus 1700

1701

Processor

CPU 0

CPU 1

1704

Processor

CPU 0

CPU 1

1702

Memory

1703

Transceiver

FIG. 17

## INTERNATIONAL SEARCH REPORT

| International application No. |
| --- |
| **PCT/CN2024/119189** |

**A.    CLASSIFICATION OF SUBJECT MATTER**

H04L25/02(2006.01)i

According to International Patent Classification (IPC) or to both national classification and IPC

**B.    FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

VCN: ENTXT; DWPI; 3GPP: 参考信号, 相位, 偏移, 变化, 补偿, 载波频率偏移, 采样频率偏移, 相干联合传输, RS, CSI, phase, offset, SFO, CFO, CJT

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2020155849 A1 (HUAWEI TECHNOLOGIES CO., LTD.) 06 August 2020 (2020-08-06) description, page 11, line 5 to page 30, line 35, and figures 1-8 | 1-5, 7-20, 22-38 |
| A | WO 2020155849 A1 (HUAWEI TECHNOLOGIES CO., LTD.) 06 August 2020 (2020-08-06) description, page 11, line 5 to page 30, line 35, and figures 1-8 | 6, 21 |
| A | CN 109391418 A (RESEARCH INSTITUTE OF CHINA MOBILE COMMUNICATIONS CO., LTD. et al.) 26 February 2019 (2019-02-26) entire document | 1-38 |
| A | WO 2023165776 A1 (NOKIA TECHNOLOGIES OY) 07 September 2023 (2023-09-07) entire document | 1-38 |
| A | NOKIA et al. "CSI Enhancement for High/Medium UE Velocities and CJT" *3GPP TSG RAN WG1 Meeting #109-e, R1-2204540*, 20 May 2022 (2022-05-20), entire document | 1-38 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 December 2024** | **23 December 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/119189**

| Patent document cited in search report | | | Publication date (day/month/year) | Patent family member(s) | | | Publication date (day/month/year) |
|---|---|---|---|---|---|---|---|
| WO | 2020155849 | A1 | 06 August 2020 | CN | 111511010 | A | 07 August 2020 |
| CN | 109391418 | A | 26 February 2019 | None | | | |
| WO | 2023165776 | A1 | 07 September 2023 | CN | 118786357 | A | 15 October 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311294996